# EUROPEAN PATENT APPLICATION

(11) **EP 4 851 824 A1**
(43) Date of publication of application: **09.12.2026**
(21) Application number: 26182511.1
(22) Date of filing: 02.06.2026
(51) Int. Cl.: G06F 16/901, G06F 16/2455

(54) **SYSTEMS AND METHODS FOR ANNS (APPROXIMATE NEAREST NEIGHBORS SEARCH) IN NVM WITH DYNAMIC CACHE AND MULTIPLE ENTRY POINTS**

(30) Priority: 03.06.2025 US 202563816874 P; 14.04.2026 US 202619647285
(71) Applicant: Kioxia Corporation, Tokyo 105-8001 (JP)
(72) Inventor: Kaplan, Yedidia, 69719 Tel Aviv (IL); Yadai, Eviatar, 69719 Tel Aviv (IL); Tsalmon, Shimon, 69719 Tel Aviv (IL); Sella, Assaf, 69719 Tel Aviv (IL); Schnarch, Miki, 69719 Tel Aviv (IL)
(74) Representative: Hoffmann Eitle

(57) **Abstract**

A flash memory system may include one or more processors and a non-volatile memory storing information pieces related to a plurality of nodes of a graph. The one or more processors may determine multiple nodes among the plurality of nodes, determine, based on the multiple nodes, an order of the plurality of nodes, and for each node of the plurality of nodes in the order, write, to the non-volatile memory, contiguously a set of information pieces being related to the node and one or more neighbors of the node in the graph. A first set of information pieces related to a first node and one or more neighbors of the first node may be written to the non-volatile memory contiguously to a second set of information pieces related to a second node next to the first node in the order and one or more neighbors of the second node.

## Description

### TECHNICAL FIELD

The present arrangements relate generally to systems and methods for performing operations of a flash memory, and more particularly to systems and methods for writing, to a non-volatile memory (NVM), data representing or corresponding to a plurality of nodes of a graph and/or performing an ANNS (approximate nearest neighbors search) on the graph stored in the NVM with a dynamic cache and/or multiple entry points.

### BACKGROUND

Approximate Nearest Neighbor Search (ANNS) algorithms aim to efficiently find the closest vectors to a given query vector within a large vector space. Graph-based ANNS methods can connect vectors in the space via a graph structure, where the search algorithm traverses the graph to locate the nodes (vectors) closest to the query. These algorithms can be used to retrieve most relevant information elements from external data sources. In one approach, ANNS can be used in applications of Retrieval-Augmented Generation (RAG)-based Large Language Models (LLMs). In this approach, the LLM can utilize external information sources containing up-to-date and reliable information to ground its responses. The effectiveness of grounding can increase with the size of the external dataset.

The conventional ANNS algorithms can store vectors in DRAM or store highly duplicated vectors in an NVM to enable fast graph searches. However, these approaches do not scale well with increasing vector dataset sizes due to the high cost of the search media. Improvements in scalability of ANNs with increasing vector dataset sizes remain desired.

### SUMMARY

The present arrangements relate to system and method for writing, to an NVM, data representing or corresponding to a plurality of nodes of a graph and/or performing an ANNS on the graph stored in the NVM with a dynamic cache and/or multiple entry points.

According to certain aspects, arrangements provide a method for writing, to a non-volatile memory, data representing a plurality of nodes of a graph. The method may include determining, by one or more processors, multiple nodes among the plurality of nodes. The method may include determining, by the one or more processors based at least on the multiple nodes, an order of the plurality of nodes. The method may include for each node of the plurality of nodes in the order, writing, by the one or more processors, to the non-volatile memory, a set of information pieces contiguously, the set of information pieces being related to the node and one or more neighbors of the node in the graph. A first set of information pieces related to a first node and one or more neighbors of the first node may be written to the non-volatile memory contiguously to a second set of information pieces related to a second node next to the first node in the order and one or more neighbors of the second node.

According to other aspects, arrangements provide a flash memory system including a non-volatile memory and one or more processors. The non-volatile memory may be configured to store information pieces related to a plurality of nodes of a graph. The one or more processors may be configured to determine multiple nodes among the plurality of nodes. The one or more processors may be configured to determine, based at least on the multiple nodes, an order of the plurality of nodes. For each node of the plurality of nodes in the order, the one or more processors may be configured to write, to the non-volatile memory, a set of information pieces contiguously, the set of information pieces being related to the node and one or more neighbors of the node in the graph. A first set of information pieces related to a first node and one or more neighbors of the first node may be written to the non-volatile memory contiguously to a second set of information pieces related to a second node next to the first node in the order and one or more neighbors of the second node.

### BRIEF DESCRIPTION OF THE DRAWINGS

These and other aspects and features of the present arrangements will become apparent to those ordinarily skilled in the art upon review of the following description of specific arrangements in conjunction with the accompanying figures, wherein:
FIG. 1 is a block diagram illustrating an example flash memory system according to some arrangements.
FIG. 2 illustrates an example of a graph including a plurality of nodes, according to some arrangements.
FIG. 3 illustrates an example of data structures in an NVM for storing data representing or corresponding to a plurality of nodes in a graph, according to some arrangements.
FIG. 4 illustrates an example of configurations for storing data representing or corresponding to a plurality of nodes in a graph before and after rearrangement of data, according to some arrangements.
FIG. 5 illustrates an example description of a greedy-search algorithm, according to some arrangements.
FIG. 6 is a diagram illustrating an example description of a greedy-search algorithm optimized for NVM, according to some arrangements.
FIG. 7 illustrates an example of results of a greedy-search algorithm, according to some arrangements.
FIG. 8 illustrates an example of results of a greedy-search algorithm using a dynamic cache, according to some arrangements.
FIG. 9 is a flowchart illustrating an example methodology for managing a dynamic cache, according to some arrangements.
FIG. 10 illustrates an example of a dynamic cache and a hash table, according to some arrangements.
FIG. 11 is a flowchart illustrating an example methodology for managing a dynamic cache, according to some arrangements.
FIG. 12 is a flowchart illustrating an example methodology for managing a dynamic cache, according to some arrangements.
FIG. 13 illustrates an example of a dynamic cache and a hash table, according to some arrangements.
FIG. 14 is a flowchart illustrating an example methodology for managing a dynamic cache, according to some arrangements.
FIG. 15A to FIG. 15D illustrate example results of performance of dynamic caches, according to some arrangements.
FIG. 16A and FIG. 16B illustrate an example graph including a single entry point and an example graph including multiple entry points, respectively, according to some arrangements.
FIG. 17 is a flowchart illustrating an example methodology for generating (initializing) multiple entry points, according to some arrangements.
FIG. 18A to FIG. 18C illustrate example results of performance of using multiple entry points, according to some arrangements.
FIG. 19 is a flowchart illustrating an example methodology for vector arrangement for multiple entry points, according to some arrangements.
FIG. 20 illustrates an example of hop level assignments for vector arrangement for multiple entry points, according to some arrangements.
FIG. 21 illustrates an example of an ordering process for vector arrangement for multiple entry points, according to some arrangements.
FIG. 22 illustrates example results (queries per second (QPS) vs. Recall@10) of throughput of searches with different configurations, according to some arrangements.
FIG. 23 is a flowchart illustrating an example methodology for writing, to an NVM, data representing or corresponding to a plurality of nodes of a graph with multiple entry points, according to some arrangements.

### DETAILED DESCRIPTION

According to certain aspects, arrangements in the present disclosure relate to techniques for writing, to a non-volatile memory (NVM), data representing or corresponding to a plurality of nodes of a graph and/or performing an ANNS (approximate nearest neighbors search) on the graph stored in the NVM with a dynamic cache and/or multiple entry points.

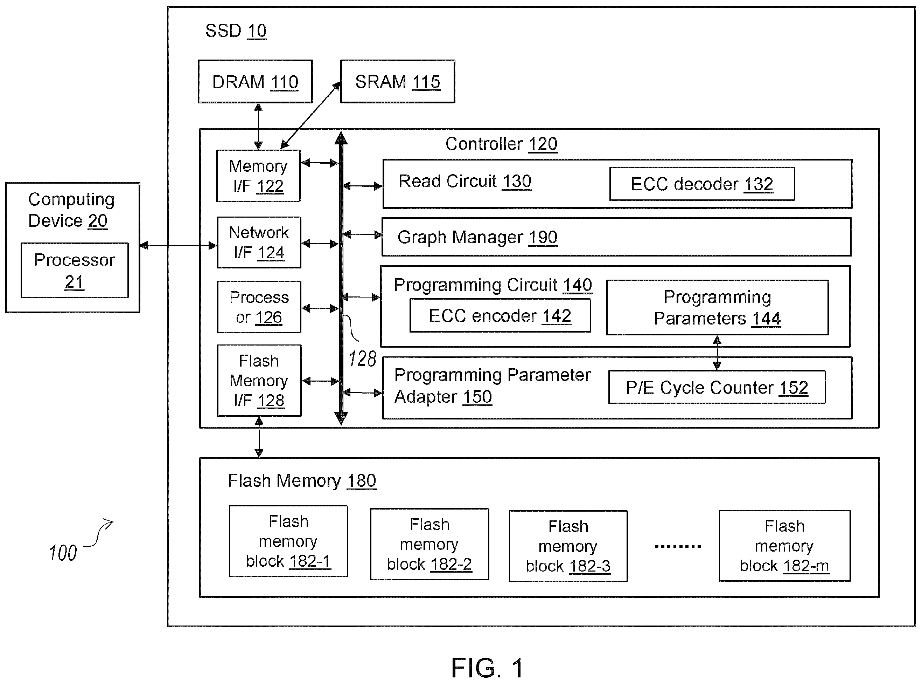

Referring to FIGS. 1-23, arrangements of systems and methods for the present solution of writing, to an NVM, data representing or corresponding to a plurality of nodes of a graph and/or performing an ANNS algorithm on the graph stored in the NVM with a dynamic cache and/or multiple entry points.

FIG. 1 is a block diagram illustrating an example flash memory system according to some arrangements. Referring to FIG. 1, a flash memory system 100 may include a computing device 20 and a solid-state drive (SSD) 10, which is a storage device and may be used as a main storage of an information processing apparatus (e.g., a host computer). The SSD 10 may be incorporated in the information processing apparatus or may be connected to the information processing apparatus via a cable or a network.

The computing device 20 may be an information processing apparatus (computing device). In some arrangements, the computer device 20 which is configured to handle or process data for training and perform a training a neural network (e.g., DNN 300), and the data for training may be collected from a plurality of SSDs by a plurality of computing devices. The data collected from the plurality of SSDs may be recorded and handled/processed by a different computing device, which is not necessarily connected to any of the SSDs and which performs the training based on the collected data. The computing device 20 includes a processor 21 and/or a database system 26. The database system 26 may store read thresholds values including training sets or results of a training.

The SSD 10 includes, for example, a controller 120 and a flash memory 180 as non-volatile memory (e.g., a NAND type flash memory). The SSD 10 may include a random access memory which is a volatile memory, for example, DRAM (Dynamic Random Access Memory) 110 and/or SRAM (Static Random Access Memory) 115. The random access memory has, for example, a read buffer which is a buffer area for temporarily storing data read out from the flash memory 180, a write buffer which is a buffer area for temporarily storing data written in the flash memory 180, and a buffer used for a garbage collection. In some arrangements, the controller 120 may include DRAM or SRAM.

In some arrangements, the flash memory 180 may include a memory cell array which includes a plurality of flash memory blocks (e.g., NAND blocks) 182-1 to 182-m. Each of the blocks 182-1 to 182-m may function as an erase unit. Each of the blocks 182-1 to 182-m includes a plurality of physical pages. In some arrangements, in the flash memory 180, data reading and data writing are executed on a page basis, and data erasing is executed on a block basis.

In some arrangements, the controller 120 may be a memory controller configured to control the flash memory 180. The controller 120 includes, for example, a processor (e.g., CPU) 126, a flash memory interface 128, and a memory interface 122, a network interface 124, all of which may be interconnected via a bus 128. The memory interface 122 may include a DRAM controller configured to control an access to the DRAM 110, and a SRAM controller configured to control an access to the SRAM 115. The flash memory interface 128 may function as a flash memory control circuit (e.g., NAND control circuit) configured to control the flash memory 180 (e.g., NAND type flash memory). The network interface 124 may function as a circuit which receives various data from the computing device 20 and transmits data to the computing device 20. The data may include a plurality of sets of read thresholds or other data collected from the flash memory 180 or a plurality of SSDs for training a neural network (e.g., DNN 300).

The controller 120 may include a read circuit 130, a programming circuit (e.g. a program DSP) 140, and/or a programming parameter adapter 150. As shown in FIG. 1, the adapter 150 can adapt the programming parameters 144 used by programming circuit 140 as described above. The adapter 150 in this example may include a Program/Erase (P/E) cycle counter 152. Although shown separately for ease of illustration, some or all of the adapter 150 can be incorporated in the programming circuit 140. In some arrangements, the read circuit 130 may include an ECC decoder 132. In some arrangements, the programming circuit 140 may include an ECC encoder 142.

The controller 120 may include a graph manager 190 which can be implemented in hardware (e.g., circuitry or one or more processors), firmware, software, or a combination thereof. The graph manager 190 can write, to an NVM (e.g., flash memory 180), data representing or corresponding to a plurality of nodes of a graph and/or perform an ANNS search on the graph stored in the NVM with a dynamic cache and/or multiple entry points. Arrangements of memory controller 120 can include additional or fewer components such as those shown in FIG. 1.

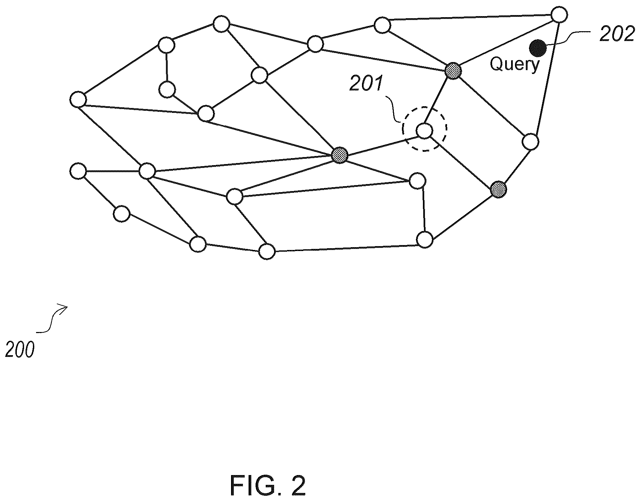

FIG. 2 illustrates an example of a graph 200 including a plurality of nodes, according to some arrangements. Graph-based ANNS algorithms (e.g., DiskANN and HNSW) can operate by iteratively traversing vectors (e.g., vectors corresponding to or related to nodes) in the graph 200 to identify nodes closest to a query 202. The term vector refers to an n-dimensional vector which has n components corresponding to respective data or values. For example, each item (e.g., data) in a data set can be represented as a corresponding vector. The term query refers to a request for data or information from a database or a data storage (e.g., DRAM, NVM, a storage in a cloud system, etc.). In some arrangements, a query (e.g., query 202) can be represented as a vector having the same dimension as vectors corresponding to or related to nodes in a graph (e.g., nodes in the graph 200).

In some arrangements, a system (e.g., flash memory system) can start a process of an ANNS algorithm from one or more entry points 201 (also referred to as entry nodes), and in each iteration, the system can employ a greedy-search algorithm. In some arrangements, the system (or the ANNS algorithm) can visit a single node in each iteration, read the neighbor vectors of the currently visited node, and compute their distances to the query 202. In some arrangements, based on these distances, the system can record or identify the vectors closest to the query and select the next node to visit. In some arrangements, this iterative process can continue until no other candidate node can yield vectors closer to the query. At the end of the search, the system (or the algorithm) can provide k closest vectors to the query that have been recorded during the search. In some arrangements, the system can compress the vectors used in the search using a product quantization (PQ) compression algorithm to save on storage media and computational power. These compressed vectors are referred to as PQ vectors.

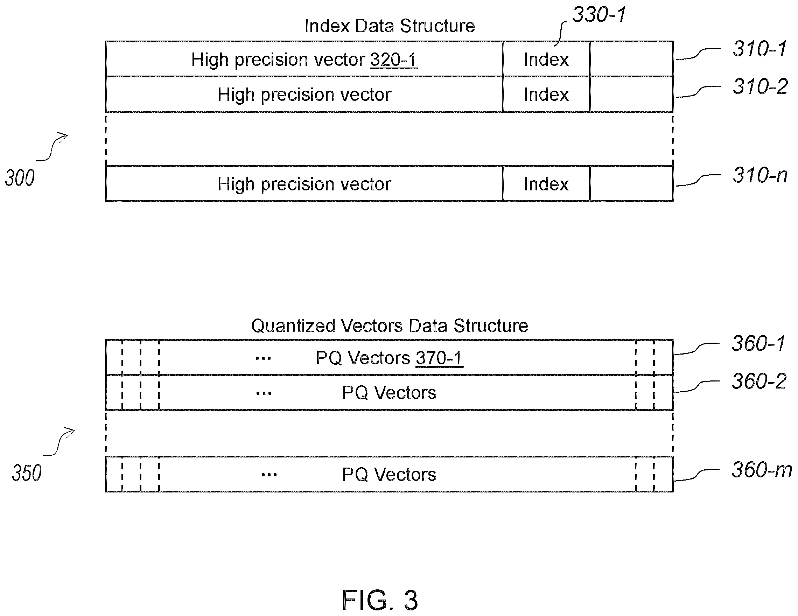

FIG. 3 illustrates an example of data structures 300, 350 in an NVM for storing data representing or corresponding to a plurality of nodes in a graph, according to some arrangements. In some arrangements, the system can store both the index and vectors in an NVM (e.g., SSD) using two distinct data structures. In some arrangements, the first data structure 300, referred to as "index data structure", can include an entry (e.g., entry 310-1, 310-2, ..., 310-n) for each vector in the dataset. In some arrangements, each entry (e.g., entry 310-1) can include a graph structure (e.g., Index 330-1), which lists the neighboring vectors (e.g., indexes corresponding to the neighboring vectors), and a high-precision version of the vector itself (e.g., high precision vector 320-1).

In some arrangements, the second data structure 350, referred to as "quantized vectors data structure", can contain quantized versions of the vectors (e.g., PQ vectors 370-1). The quantized vectors data structure 350 can include a plurality of codewords (e.g., codewords 360-1, 360-2, ..., 360-m). In some arrangements, these vectors can be compressed using PQ compression and can be packed, stored or written into SSD data units. For instance, 32 PQ vectors of the PQ vectors 370-1, each with a length of 128 bytes, can be packed into a 4KiB codeword (e.g., codeword 360-1). This arrangement can optimize storage efficiency and access speed.

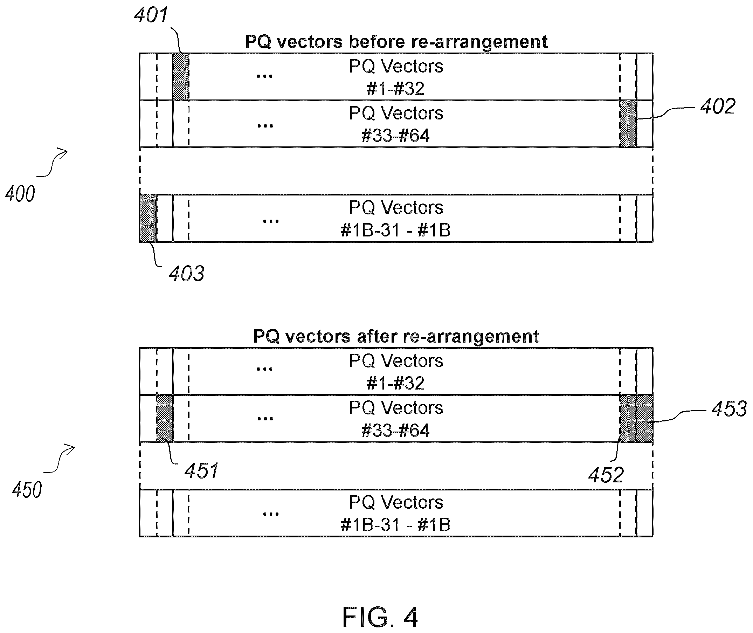

FIG. 4 illustrates an example of configurations (e.g., data structures) 400, 450 for storing data representing or corresponding to a plurality of nodes in a graph before and after rearrangement of data, according to some arrangements. The configuration 400 shows PQ vectors before rearrangement (or arrangement), while the configuration 450 shows PQ vectors after rearrangement (or arrangement). In some arrangements, the configurations 400, 450 can include a plurality of codewords, each codeword including 32 PQ vectors. The codewords may be the basic 4KiB data units of flash access and can be protected by error correction codes (ECC). In some arrangements, in each iteration of the greedy-search algorithm, the system can read a certain number of neighboring PQ vectors. In the configuration 400 before rearrangement, these vectors may be randomly stored within the structure (e.g., PQ vectors 401, 402, 403), this search process can result in multiple random read transactions. In some arrangements, the system (e.g., flash memory system, or an arrangement algorithm) can optimize the placement of vectors by arranging neighboring vectors (e.g., PQ vectors 451, 452, 453) adjacently or contiguously on the NVM (e.g., SSD). This strategic arrangement can significantly reduce the number of random read transactions used to access the neighboring vectors.

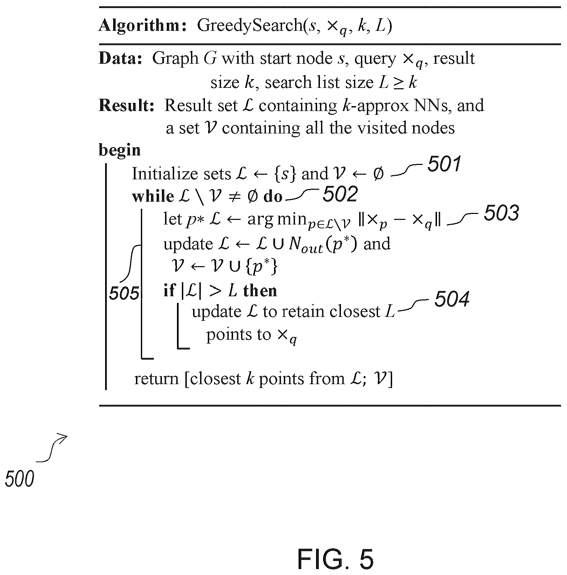

FIG. 5 illustrates an example description of a greedy-search algorithm 500, according to some arrangements. In some arrangements, the greedy-search algorithm 500 is performed by one or more processors (e.g. controller 120, processors 126, graph manager 190). In other arrangements, the greedy-search algorithm 500 is performed by other entities (e.g., processor 21 of computing device 20). In some arrangements, the one or more processors can iteratively traverse vectors (nodes) Xₚ in a graph G to find nodes Xₚ closest to a query X_{q} (see line 503). In some arrangements, the one or more processors can start from one or more entry points s (see line 501) and, in each iteration 505, visits a single node, reads the neighbor-vectors of the currently visited node, and computes their distances to the query (see line 503). In some arrangements, based on these distances, the one or more processors can record or retain the vectors closest to the query (e.g., updating the result set to retain closed L vectors to X_{q}; see line 504) and choose the next node to visit. In some arrangements, the one or more processors can repeat this process until no other candidate node can yield vectors closer to the query (see line 502).

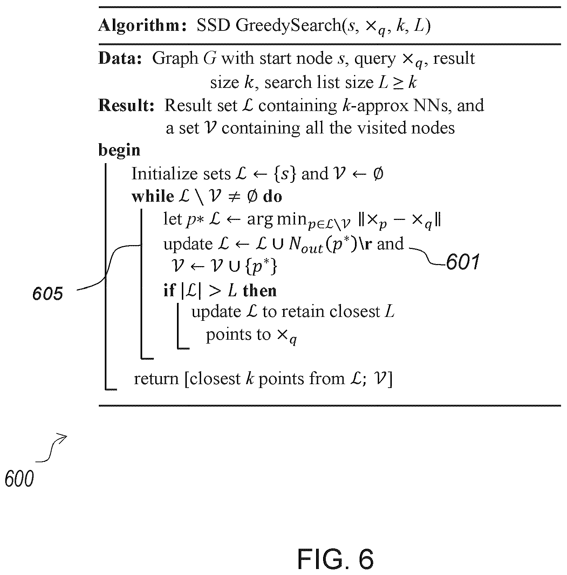

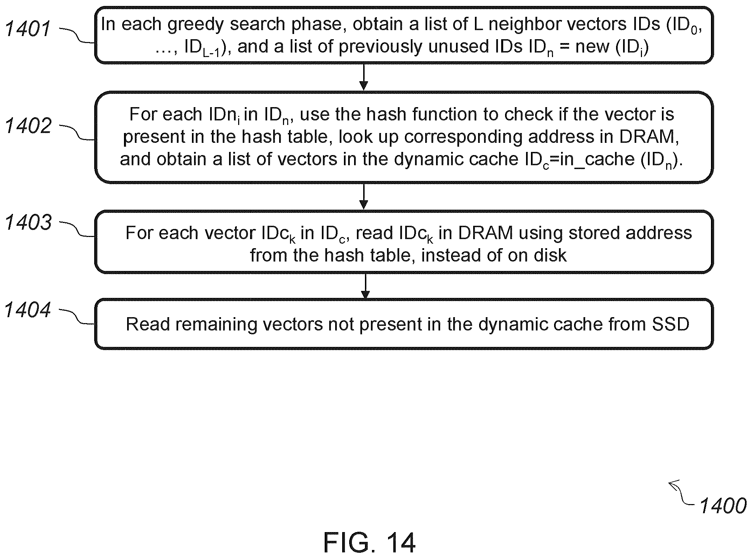

FIG. 6 is a diagram 600 illustrating an example description of a greedy-search algorithm optimized for NVM, according to some arrangements. In the context of a graph-based algorithm where vectors are stored in DRAM, such as DiskANN, the greedy-search algorithm can be employed during each graph traversal iteration to read all neighbor vectors of the currently visited node. In some arrangements, a system (e.g. controller 120, processors 126, graph manager 190) can optimize or enhance the greedy search phase (e.g., each graph traversal iteration) by excluding vectors that have already been read. FIG. 6 shows this optimized or enhanced greedy-search algorithm which can reduces the number of SSD reads required to access the neighbor vectors. In some arrangements, the optimized greedy-search algorithm can use a list of all vectors previously read by the algorithm, which is denoted by "r" (see line 601 in FIG. 6). In some arrangements, the system can exclude previously read vectors (see line 601 in FIG. 14). This exclusion of previously read vectors does not impact the algorithm mathematically and can result in the same recall as the original algorithm (e.g., the algorithm shown in FIG. 5). In some arrangements, the system can perform the optimized greedy-search algorithm (e.g., algorithm shown in FIG. 6) in conjunction with a vector arrangement algorithm such as an algorithm for optimizing the placement of vectors by arranging neighboring vectors (e.g., PQ vectors 451, 452, 453 in FIG. 4) adjacently or contiguously on the NVM (e.g., SSD). In this manner, during each graph traversal iteration (e.g., line 605 in FIG. 6), the system can use the optimized greedy-search algorithm to exclude previously visited neighbors (e.g., line 601 in FIG. 6), while the remaining vectors are read from the arranged data structure.

HNSW is an ANNS algorithm in which both index and vectors are stored in DRAM. DiskANN is an ANNS algorithm developed by Microsoft^{®}, in which the graph-structure (index) is stored in SSD and vectors (PQ compresses) are stored in DRAM. AiSAQ-S is an all-in-storage ANNS algorithm developed by Kioxia^{®}, in which vectors are stored in flash along with the index. AiSAQ-S is described in U.S. Patent Application No. 19/068,706, the disclosure of which is incorporated herein by reference in its entirety. Graph-based ANNS such as AiSAQ-S, DiskANN and HNSW iteratively traverse the vectors (nodes) in the graph to find the nodes closest to the query. The ANNS algorithm starts from an entry point (entry node), and in each iteration a greedy-search algorithm (e.g., the algorithm shown in FIG. 5) is typically used. The greedy-search algorithm visits a single node in each iteration. The greedy-search algorithm reads the neighbor-vectors of the currently visited node and computes their distances to the query (see FIG. 5). Based on the distances, the greedy-search algorithm records the vectors closest to the query and chooses the next visited node. The iterations repeat until there is no other candidate visited node that can yield vectors that are closer to the query. At termination, the greedy-search algorithm provides the k closest vectors to the query recorded during the search.

In some arrangements, the vectors used for the search are typically compressed using a PQ quantization algorithm to save storage media and compute power, and are referred to as PQ vectors (e.g., PQ vectors 370-1 in FIG. 3). In some arrangements, a system (e.g. controller 120, processors 126, graph manager 190) can store in SSD the index and vectors in two data structures (see FIG. 3). The Index data-structure can include an entry per vector in the data set. Each entry (e.g., entry 310-1, 310-2, ..., 310-n) can include graph-structure ("Index") with the list of neighbor vectors (e.g., Index 330-1), and a high precision representation of the vector (e.g., high precision vector 320-1). The quantized vectors data structure (e.g., quantized vectors data structure 350) can include a quantized version of the vectors, e.g., using PQ quantization, packed in SSD data-units. For example, 32 PQ vectors of length 128B (e.g., PQ vectors 370-1) can be packed in a 4KiB codeword (e.g., codeword 360-1).

In some arrangements, in each greedy-search iteration, the system can read *y* neighbor PQ vectors. If the vectors are randomly stored in the structure, each greedy-search iteration may result in up to *y* random read transactions. The system can perform a vector arrangement algorithm that can arrange the vectors such that neighboring vectors in the graph are placed adjacently or contiguously on SSD. As a result, multiple vectors required for a single search iteration can be accessed with a single random read transaction, resulting in a reduction in random read transactions required for reading the neighbors.

In some arrangements, a system can perform a selection algorithm for initialization of a static cache (e.g., a cache storing a static set of vectors which is initialized before performing a search), whereby most frequently used vectors are stored in a DRAM-based cache to optimize data-access, and trades off search media cost and search performance.

In some arrangements, in a graph-based algorithm where vectors are stored in DRAM, a system can perform a greedy-search algorithm, used in each graph traversal iteration, to read all neighbor vectors of currently visited node. In some arrangements, a system can optimize the greedy-search phase by excluding vectors that have been read earlier in the search. This can reduce the number of SSD reads required to read the neighboring vectors of the current node.

ANNS algorithms can aim to efficiently find the closest vectors to a given query vector out of a large vector space. Graph-based ANNS can connect all vectors in the space in a graph structure, and the search algorithm can traverses the vectors (nodes) in the graph to find the nodes closest to the query. One of the main applications of ANNS is Retrieval Augmented Generation (RAG)-based Large Language Models (LLMs). In this scheme, the LLM can use external information sources which contain up-to-date and reliable information to "ground" its responses - a scheme referred to as RAG. As the size of the external data-set increases, the grounding efficiency can also increase. ANNS algorithms are used to retrieve the most relevant information elements in the external data sources. Additional major applications include offline semantic search and recommendation systems.

In one aspect, the conventional ANNS algorithms can store the vectors in DRAM, or store highly duplicated vectors in flash to provide a fast graph search. These approaches do not scale well with increasing size of the vector data-set due to high cost of the search media. Some conventional ANNS algorithms can store both the graph structure (index) and the vectors in flash, and/or use flash-optimized algorithms and data-structures to optimize search performance. Such algorithms can have a low DRAM footprint and low SSD footprint, and provide very low implementation cost that enables economic implementation of search on very large-scale vector datasets, and large numbers of small-scale vector datasets. Still, improvements in minimizing the number of flash accesses (or minimizing search latency) with increasing vector dataset sizes remain desired.

To solve these problems, according to certain aspects, arrangements in the present disclosure relate to systems and methods for providing an all in storage ANNS with a dynamic cache and multiple entry points. In some arrangements, systems and/or methods aim to can minimize the number of flash accesses compared to the conventional ANNS to decrease the search latency, both by making efficient use of limited DRAM and by decreasing search complexity. The systems and methods according to some arrangements therefore can enable economic and more performant scaling of RAG and other ANNS applications.

In some arrangements, a system (e.g. controller 120, processors 126, graph manager 190) can perform a dynamic cache algorithm for a dynamic cache to use vectors previously read during a search and reduce flash accesses. The system may be a flash memory system including solid state drives (SSD) and/or universal flash storage (UFS). For brevity, the term SSD can denote flash memory, SSD, USF, or any type of non-volatile memory. In addition to efficient arrangement of vectors in flash that enables reading multiple relevant vectors in a single flash access, the system can perform the dynamic cache algorithm to store in memory unused vectors read in previous flash accesses, and use the unused vectors in later graph search phases. This caching can amplify the effect of the efficient vector arrangement, hence minimizing the average number of flash accesses during a search and reducing a search time, while consuming minimal memory footprint. In some arrangements, the system can use a dynamic cache such that vectors accessed from flash but unused during a search iteration are stored according to a defined prioritization for rapid access when needed later in a search.

In some arrangements, the system can use available memory for a per-thread dynamic cache. In some arrangements, the system can store all graph data on SSD to avoid using DRAM during a search. However, in many cases, it would be desirable to use a limited amount of DRAM in order to lower disk reads, which would improve performance. In some arrangements, the system can perform a selection method for a static cache of frequently accessed vectors using a variable amount of memory. In some arrangements, the system can use a per-thread dynamic cache. In many cases, the dynamic cache can make more efficient use of available memory than the static cache, and still allow for using a static cache with any remaining available memory.

In some arrangements, the system can perform an algorithm to improve ANN search by generating and using multiple entry points to search the graph, while the conventional systems use a single entry point. By using a diverse set of candidate entry points (which are generated in advance) during a search, the system can decrease the search length. In some arrangements, the system can use multiple entry points by generating a diverse set of candidate entry points among vectors on the graph for use during a search.

In some arrangements, in graph-based algorithms, the system can start a search from a single entry point, e.g., the medoid, and perform, in each consecutive (graph traversal) iteration, a greedy-search algorithm to read all newly encountered neighboring vectors of currently visited node. In some arrangements, the system can reduce the length of the greedy-search phase by generating multiple entry points, and selecting one or more entry points closest to the query to initialize the search process. This multiple entry points scheme can lower the number of required visits to graph nodes, and lower the number of SSD reads required to read neighboring vectors.

In some arrangements, the system can perform a vector arrangement algorithm for multiple entry points to arrange vectors in flash such that vectors commonly accessed during the same searches in a multiple entry point search are placed adjacently or contiguously on flash. In some arrangements, the system can perform a vector arrangement algorithm for a single-entry point. In some arrangements, the system can extend the vector arrangement algorithm to support multiple entry points so that graph-based algorithms can access groups of neighbouring vectors in each search iteration. Efficient vector arrangement can enable the system to read more vectors in a single flash access, hence minimizing the average number of flash accesses during search and reducing search time. In some arrangements, the system can reduce search latency using both efficient storage of vectors (e.g., using the vector arrangement algorithm for multiple entry points) and optimized graph entry points (e.g., by generating an optimized set of candidate entry points).

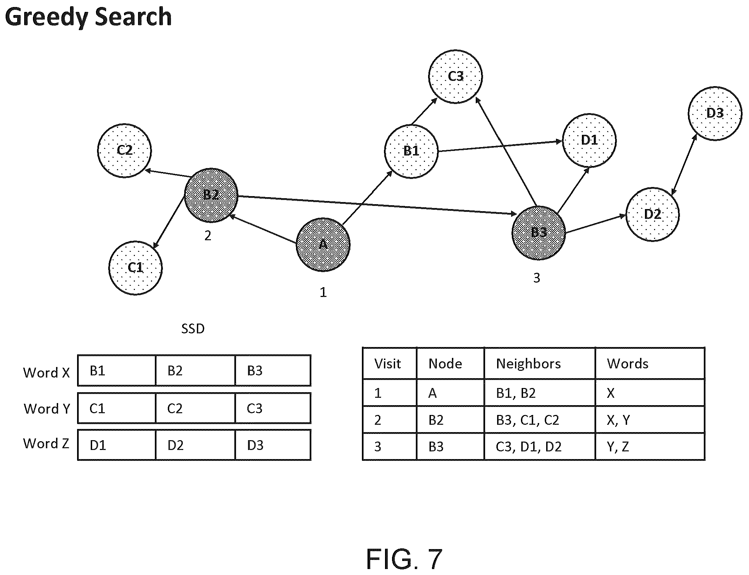

FIG. 7 illustrates an example of results of a greedy-search algorithm, according to some arrangements. In some arrangements, when reading words from SSD, the system can immediately discard any read vectors not required for the current search iteration. As a result, if the vectors are needed at a later iteration of the graph search, the word may need to be accessed again, and may result in up to *y* random read transactions of the codeword in *y* separate iterations.

In the graph search shown in FIG. 7, vectors (or nodes) B1 and B3, both contained in the codeword X, are encountered in consecutive search iterations ('visits') 1 and 2, respectively. Since vector B3, unlike B1, is not used during visit 1, vector B3 may not be stored or evaluated. Therefore, when vector B3 is encountered in visit 2, an additional read of word X from disk may be required. Due to the use of the vector arrangement algorithm (e.g., arranging neighboring vectors adjacently or contiguously on the NVM), read words containing the vectors required for a given search iteration often can contain other vectors that may be required in later search iterations. It is noted that in contrast, when using a random vector arrangement, all other vectors in the word may have a negligible probability of being required later during search.

In some arrangements, a dynamic cache algorithm according to the present disclosure can store some accessed words in part or in whole in DRAM such that unused vectors can be rapidly accessed in future iterations. In some arrangements, the system can combine this dynamic cache algorithm with a vector arrangement algorithm (e.g., arranging neighboring vectors adjacently or contiguously on the NVM) to ensure a higher probability that words stored in the dynamic cache can be encountered in future search iterations. This results in a reduction in random read transactions by use of stored vectors from previously accessed codewords.

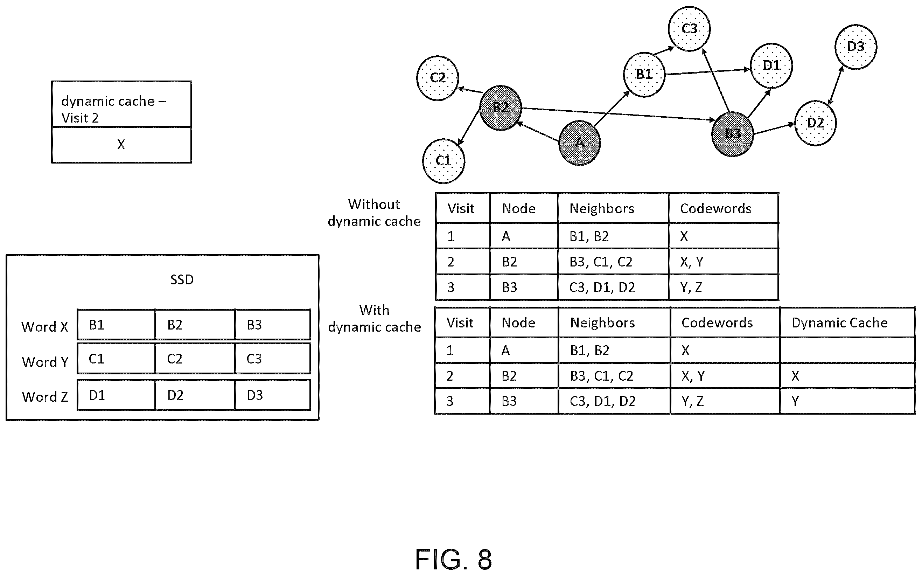

FIG. 8 illustrates an example of results of a greedy-search algorithm using a dynamic cache, according to some arrangements. In the graph search example shown in FIG. 8, vectors B1 and B3, both contained in codeword X, can be encountered in consecutive search iterations ('visits') 1 and 2, respectively. In some arrangements, codeword X, including vector B3, can be stored in the dynamic cache. When vector B3 is encountered in visit 2, vector B3 can be read from the copy of X stored in the dynamic cache on DRAM, eliminating the second read of codeword X from disk seen in the previous illustration in FIG. 7.

In some arrangements, a data structure for a dynamic cache can include a dynamic cache for storing vectors accessed previously during a search, and/or a hash table that stores the identifiers (IDs) and/or locations of all stored vectors for fast access. Due to limited space being available to the dynamic cache for storing vectors read during a search, the system can use a cache management algorithm to discard vectors from the cache when adding new vectors to a full cache.

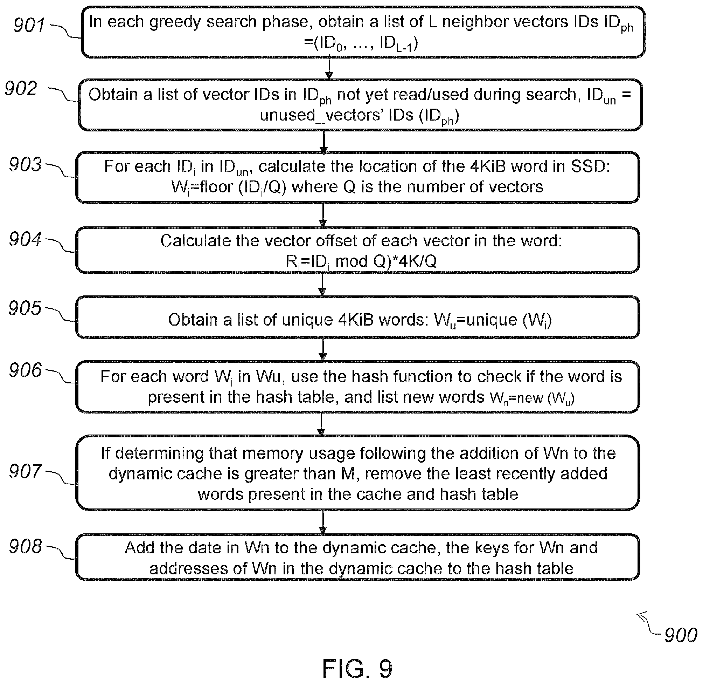

FIG. 9 is a flowchart illustrating an example methodology for managing a dynamic cache, according to some arrangements. In some arrangements, the one or more processors can use the FIFO (First In First Out) principle for managing a dynamic cache to operate within memory constraints, and using whole-word storage. The one or more processors can use, create, generate or perform a hash function of mapping word location in the SSD to a hash table of a size relative to that of the dynamic cache.

In some arrangements, the example methodology relates to a process 900 for managing a dynamic cache. In some arrangements, the process 900 is performed by one or more processors (e.g. controller 120, processors 126, graph manager 190). In other arrangements, the process 900 is performed by other entities (e.g., processor 21 of computing device 20). In some arrangements, the process 900 includes more, fewer, or different steps than shown in FIG. 9.

In some arrangements, at step 901, during a search, in each greedy search phase, the one or more processors can obtain a list of L neighbor vectors IDs IDₚₕ=(ID₀, ..., ID_{L-1}).

In some arrangements, at step 902, the one or more processors can obtain a list of vector IDs in IDₚₕ that are not yet read/used during the search, using the following equation:IDᵤₙ = unused_vectors' IDs (IDₚₕ) ................ (Equation 1).

In some arrangements, at step 903, for each IDᵢ in IDᵤₙ, the one or more processors can calculate the location Wᵢ of the 4KiB word in SSD using the following equation: ${W}_{i} = floor \left({ID}_{i}/Q\right)$ (Equation 2) where Q is an integer representing the number of vectors.

In some arrangements, at step 904, the one or more processors can calculate the vector offset Rᵢ of each vector in the word using the following equation:
${R}_{i} = \left({ID}_{i} mod Q\right) * 4 K / Q$ (Equation 3)

In some arrangements, at step 905, the one or more processors can obtain a list of unique 4KiB words using the following equation:
${W}_{u} = unique \left({W}_{i}\right)$ (Equation 4).

In some arrangements, the unique function can be a deduplication operation that can eliminate duplicate copies of repeating Wᵢ. In some arrangements, the unique function can be an operation that can eliminate duplicate copies of Wᵢ which are located in the same word (e.g., the same 4KiB word).

In some arrangements, at step 906, the one or more processors can For each word Wᵢ in Wu, use the hash function to check if the word is present in the hash table, and obtain a list new words Wₙ that are not present in the hash table, using the following equation:
${W}_{n} = new \left({W}_{u}\right)$ (Equation 5).

In some arrangements, at step 907, assuming that there are M MB of memory are allocated to the dynamic cache, the one or more processors can determine that memory usage following the addition of Wn to the dynamic cache would be greater than M. In response to determining that the memory usage is greater than M, the one or more processors can remove the least recently added words present in the cache and/or the hash table to reduce memory usage below M.

In some arrangements, at step 908, the one or more processors can add the data in Wn to the dynamic cache. The one or more processors can add, to the hash table, the keys for Wn (e.g., the word locations on SSD) and addresses of Wn in the dynamic cache. It is noted that in the process 900 for managing a dynamic cache, only whole words can be stored in the cache, and the words can be stored contiguously. Therefore, the vector ID IDᵢ and the offset Rᵢ in the respective word Wᵢ in the SSD can be the offset in the dynamic cache. The complexity of updating the hash table and cache as a function of the size of the table N can be O(1).

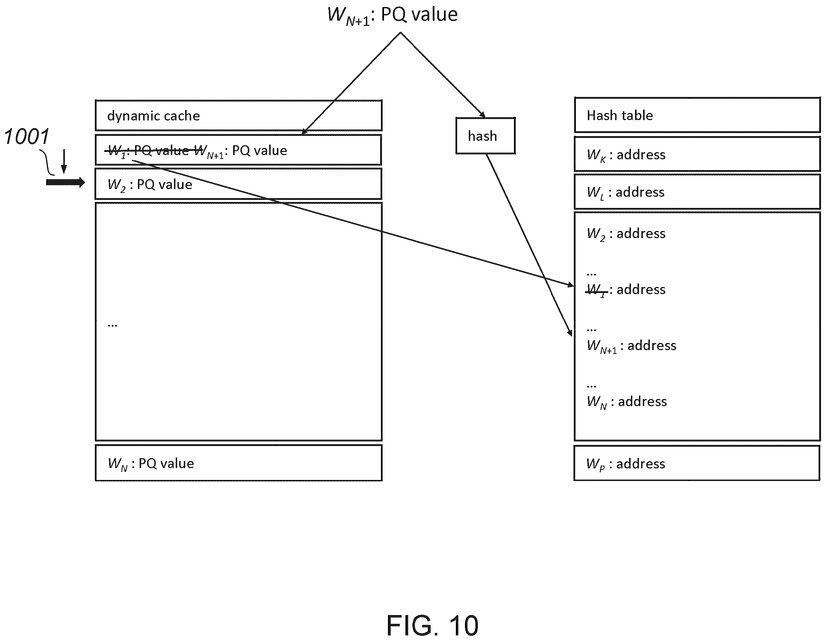

FIG. 10 illustrates an example of a dynamic cache and a hash table, according to some arrangements. In the cache update example shown in FIG. 10, *W*_{*N*+1} is a word to be written to the dynamic cache. The word's ID and value can be written to the current least-recently-written-to location in the dynamic cache ("first in" word), which previously contained *W*₁. The system can use a hash function (e.g., a mathematical algorithm or function that transforms an input of any length into a fixed-size output, called a hash value or digest) to find the hash table location for *W*_{*N*+1} and write the value of *W*_{*N*+1} to the dynamic cache and write its address in the dynamic cache to the hash table. The hash function can be used to find the hash table location for *W*₁ and/or delete the value of *W*₁ from the hash table, since it is no longer stored in the dynamic cache. The pointer 1001 can be moved to the next word in the dynamic cache, which is now the 'first in' word among words left in the dynamic cache.

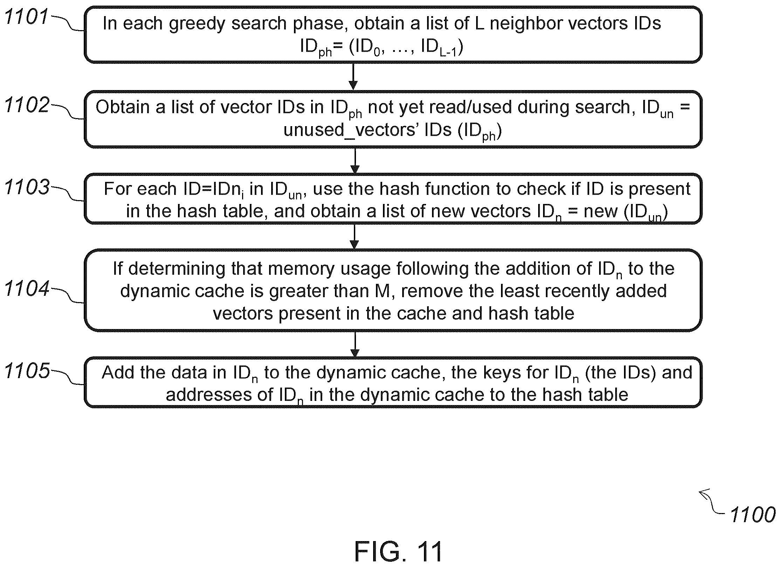

FIG. 11 is a flowchart illustrating an example methodology for managing a dynamic cache, according to some arrangements. In some arrangements, the system can use an individual-vector-storage method to manage the dynamic cache. The system can create a hash function of mapping vector IDs to a hash table of size relative to that of the dynamic cache.

In some arrangements, the example methodology relates to a process 1100 for managing a dynamic cache. In some arrangements, the process 1100 is performed by one or more processors (e.g. controller 120, processors 126, graph manager 190). In other arrangements, the process 1100 is performed by other entities (e.g., processor 21 of computing device 20). In some arrangements, the process 1100 includes more, fewer, or different steps than shown in FIG. 11.

In some arrangements, at step 1101, during a search, in each greedy search phase, the one or more processors can obtain a list of L neighbor vectors IDs IDₚₕ= (ID₀, ..., ID_{L-1}).

In some arrangements, at step 1102, the one or more processors can obtain a list of vector IDs in IDₚₕ that are not yet read/used during the search, using the following equation: ${ID}_{un} = unused _ vectors ′ IDs \left({ID}_{ph}\right)$ (Equation 6).

In some arrangements, at step 1103, for each ID=IDnᵢ in IDᵤₙ, the one or more processors can use the hash function to check if ID is present in the hash table, and obtain a list of new vectors IDₙ that are not present in the hash table, using the following equation: ${ID}_{n} = new \left({ID}_{un}\right)$ (Equation 7)

In some arrangements, at step 1104, assuming that there are M MB of memory are allocated to the dynamic cache, the one or more processors can determine that memory usage following the addition of IDₙ to the dynamic cache is greater than M. In response to determining that the memory usage is greater than M, the one or more processors can remove the least recently added vectors present in the cache and the hash table.

In some arrangements, at step 1105, the one or more processors can add the data in IDₙ to the dynamic cache, and/or add, to the hash table, the keys for IDₙ (the IDs) and addresses of IDₙ in the dynamic cache. It is noted that the process 1100 can only store unused vectors, since in some arrangements (e.g., as a result of a greedy search optimization), any previously used vectors may not be used again in the future. This scheme of only storing unused vectors in the dynamic cache can increase the efficiency of the memory allocated for the dynamic cache.

In some arrangements, the system can use the LRU (Least Recently Used) principle/scheme for cache management to operate within memory constraints. For example, the system can decide which items to remove from the cache when it becomes full (e.g., when determining that memory usage following the addition of IDₙ to the dynamic cache is greater than M). The LRU principle can prioritize keeping the most recently accessed items in the cache and removing the ones that have not been used recently. In some arrangements, the least recently used items, either codewords or vectors, can be removed from the dynamic cache to reduce memory usage below M, rather than following FIFO. In some arrangements, the system can implement the LRU scheme by adding an additional structure (e.g., data structure) to track how recently each word was accessed. In some arrangements, when reading vectors encountered during a search, the system may need to efficiently determine which vectors are present in the dynamic cache, and the specific address of those vectors in the dynamic cache.

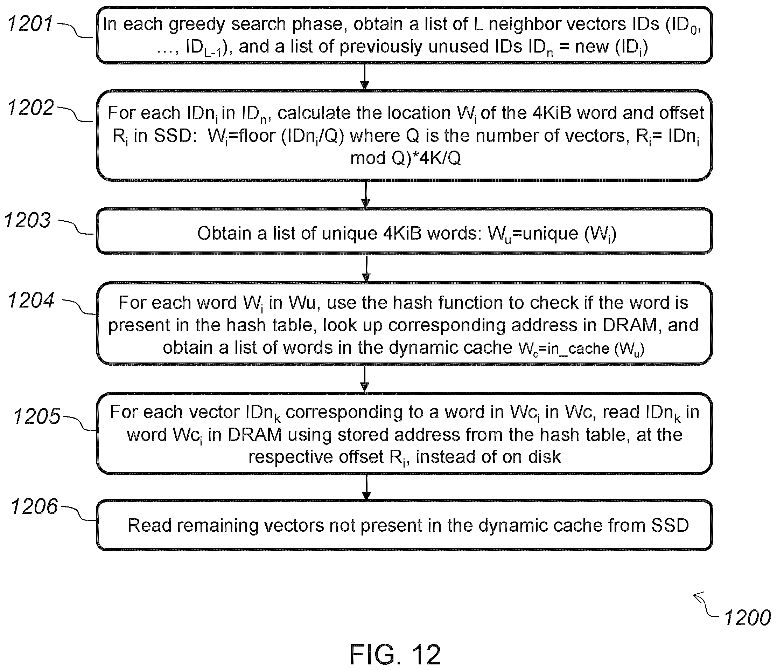

FIG. 12 is a flowchart illustrating an example methodology for managing a dynamic cache, according to some arrangements. In some arrangements, when encountering a vector ID IDᵢ to be read, the system can calculate the corresponding word location Wᵢ and vector offset Rᵢ in SSD. The system can check whether Wᵢ exists in a hash table (or in the cache). If Wᵢ is present in the cache, the system can find the address of the word Wᵢ using the address stored in the hash table. In some arrangements, the offset of the vector in the word in the dynamic cache can be the same offset Rᵢ in the word in the SSD storage. The specifics of this process used are described below.

In some arrangements, the example methodology relates to a process 1200 for managing a dynamic cache. In some arrangements, the process 1200 is performed by one or more processors (e.g. controller 120, processors 126, graph manager 190). In other arrangements, the process 1200 is performed by other entities (e.g., processor 21 of computing device 20). In some arrangements, the process 1200 includes more, fewer, or different steps than shown in FIG. 12.

In some arrangements, at step 1201, during a search, in each greedy search phase, the one or more processors can obtain a list of L neighbor vectors IDs (ID₀, ..., ID_{L-1}), and a list of previously unused IDs IDₙ using the following equation: ${ID}_{n} = new \left({ID}_{i}\right)$ (Equation 8).

In some arrangements, at step 1202, for each IDnᵢ in IDₙ, the one or more processors can calculate the location of the 4KiB word and offset in SSD using the following equations: ${W}_{i} = floor \left({IDn}_{i}/Q\right)$ (Equation 9) where Q is an integer representing the number of vectors. ${R}_{i} = \left({IDn}_{i} mod Q\right) * 4 K / Q$ (Equation 10).

For example, assuming that there are Q integral number of vectors in a 4KiB word, in case PQ vector size = 128B, Q=32.

In some arrangements, at step 1203, the one or more processors can obtain a list of unique 4KiB words using the following equation: ${W}_{u} = unique \left({W}_{i}\right)$ (Equation 11).

In some arrangements, at step 1204, for each word Wᵢ in Wu, the one or more processors can use a hash function to check if the word is present in the hash table, look up corresponding address in DRAM, and/or obtain a list of words in the dynamic cache using the following equation: ${W}_{c} = in _ cache \left({W}_{u}\right)$ (Equation 12).

In some arrangements, at step 1205, for each vector IDnₖ corresponding to a word in Wcᵢ in Wc, the one or more processors can read IDnₖ in word Wcᵢ in DRAM using stored address from the hash table, at the respective offset Rᵢ, instead of on disk. In some arrangements, at step 1206, the one or more processors can read remaining vectors not present in the dynamic cache from SSD.

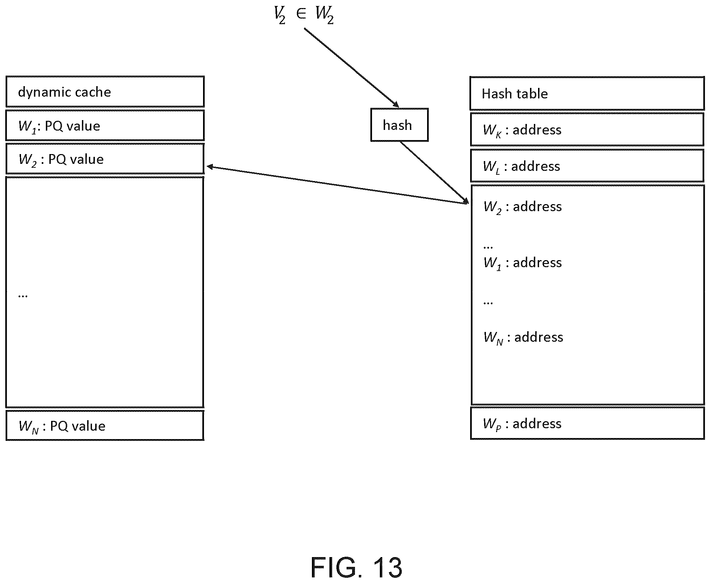

FIG. 13 illustrates an example of a dynamic cache and a hash table, according to some arrangements and also illustrates a cache read scheme in a search phase. In the cache read example shown in FIG. 13, V₂ is a vector to be read and W₂ is the corresponding word location on SSD. In some arrangements, the system can use a hash function to confirm, check or determine that W₂ is present in the hash table. The system can read the address of W₂ in the dynamic cache from the hash table, and use the address of W₂ to read V₂ from the copy of W₂ in DRAM. The complexity of reading from the hash table and cache as a function of the size of the hash table N is O(1).

FIG. 14 is a flowchart illustrating an example methodology for managing a dynamic cache, according to some arrangements. In some arrangements, when encountering a vector ID IDᵢ to be read, the system can confirm, determine or check whether the vector IDᵢ exists in a hash table or in a dynamic cache. If the vector ID IDᵢ is present in the cache, the system can find the address of IDᵢ using the address stored in the hash table. The specifics of the process used are described below.

In some arrangements, the example methodology relates to a process 1400 for managing a dynamic cache. In some arrangements, the process 1400 is performed by one or more processors (e.g. controller 120, processors 126, graph manager 190). In other arrangements, the process 1400 is performed by other entities (e.g., processor 21 of computing device 20). In some arrangements, the process 1400 includes more, fewer, or different steps than shown in FIG. 14.

In some arrangements, at step 1401, during a search, in each greedy search phase, the one or more processors can obtain a list of L neighbor vectors IDs (ID₀, ..., ID_{L-1}), and a list of previously unused IDs IDₙ using the following equation: ${ID}_{n} = new \left({ID}_{i}\right)$ (Equation 13).

In some arrangements, at step 1402, for each IDnᵢ in IDₙ, the one or more processors can use a hash function to check if the vector is present in the hash table, look up corresponding address in DRAM, and/or obtain a list of vectors in the dynamic cache using the following equation: ${ID}_{c} = in _ cache \left({ID}_{n}\right)$ (Equation 14).

In some arrangements, at step 1403, for each vector IDcₖ in ID_{c}, the one or more processors can read IDcₖ in DRAM using stored address from the hash table, instead of on disk. In some arrangements, at step 1404, the one or more processors can read remaining vectors not present in the dynamic cache from SSD.

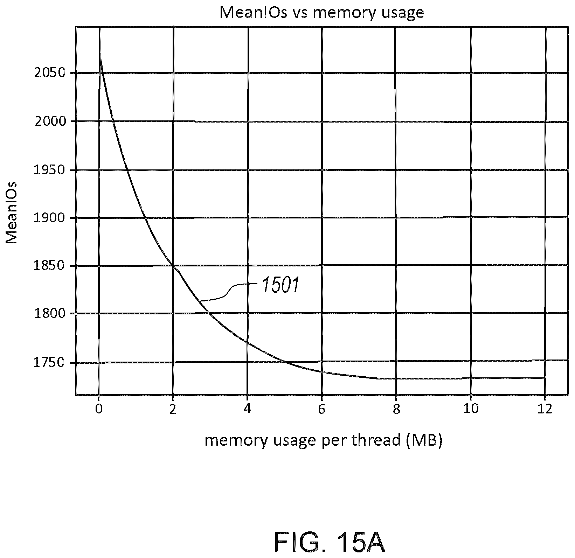

FIG. 15A to FIG. 15D illustrate example results of performance of dynamic caches, according to some arrangements. The arrangements of dynamic caches as shown in FIG. 8 to FIG. 14 have been tested in a laboratory setting, and the main results are illustrated in FIG. 15A to FIG. 15D.

FIG. 15A shows a graph 1501 indicating (measured) mean IO (number of read transactions) vs. memory usage per thread (MB). The "mean IO" refers to the average number of read transactions to access the neighbor PQ vectors when using dynamic caches for search operations across various vector datasets. The tests were conducted using several commonly adopted industry datasets as follows: (1) Falcon with 240 million vectors ("Falcon240M"), (2) Falcon with 50 million vectors ("Falcon50M"), and (3) WikiAll with 50 million vectors ("WikiAll50M"). All tests were performed with a build-time parameter, Lbuild, set to 200. Lbuild is a parameter controlling the quantality of the index build. The largest the parameter the built index is "better" but build time is increased. The trade-off between memory usage and the reduction in Mean IO are analyzed to determine the optimal dynamic cache size. For the result shown in FIG. 15A, the test used the Falcon-50M dataset and the following parameters: R = 64, PQMem = 128 bytes, diskPQ = 768, Beamwidth = 1, V = 1, Lbuild = 200, and Lsearch = 40. R is the maximal number of nodes that can be connected to each node. PQMem is the length of a PQ vector. DiskPQ is the number of PQ bytes used for quantizing the full precision vector stored in the index. The term "beamwidth" refers to the number of best partial solutions that are kept as candidates at each level of a graph or a search tree, or the number of candidates that can form a limited set in which the most promising node can be expanded. V is a vector beamwidth. Lsearch is a parameter controlling the quantality of the index search. Lsearch determines the maximal number of candidates in the candidate list.

Referring to FIG. 15A, the graph 1501 shows that as the size of the dynamic cache increases, vectors from earlier stages of the search can be retained, resulting in a greater reduction in read transactions compared to configurations with smaller caches. Once the cache size reaches approximately 6 MB, the benefits of further increases begin to diminish, as the likelihood of requiring vectors from earlier search iterations significantly decreases.

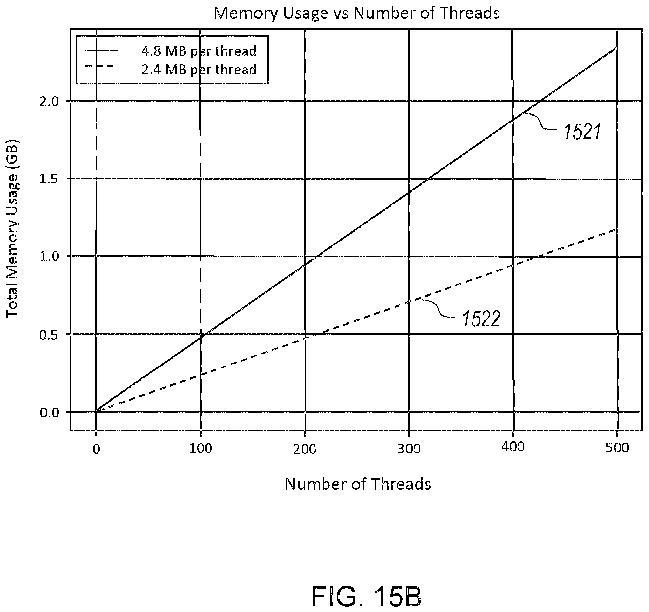

FIG. 15B shows total memory usage (GB) vs. number of threads resulting from tests for 50M vector databases. The tests focused on a dynamic cache size of 4.8 MB, which was selected to balance memory usage and effectiveness. FIG. 15B shows the relationship between total memory allocation and the number of parallel threads for 2 example dynamic cache sizes. In FIG. 15B, lines 1521, 1522 indicate total memory usage (GB) vs number of threads for the dynamic cache size of 4.8MB per thread and the dynamic cache size of 2.4MB per thread, respectively. Since a separate dynamic cache needs to be managed for each thread, the required memory allocation scales linearly with the number of threads run in parallel. Unlike the dynamic cache, the static cache can be shared across threads. Therefore, as dynamic cache memory scales with thread count, allocating the same total memory to a static cache enables a larger, shared cache-resulting in greater effectiveness compared to smaller, per-thread dynamic caches. However, the memory allocation required for the static cache scales linearly with the number of 'tenants' (e.g., databases), since each tenant has a unique graph and requires its own static cache. In contrast, the dynamic cache memory allocation can be invariant to the number of tenants, since each thread already manages an independent dynamic cache.

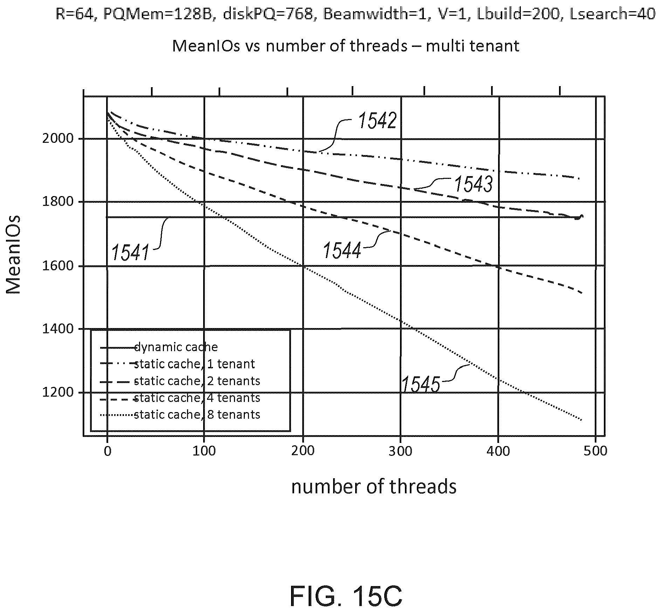

FIG. 15C shows mean IOs vs. numbers of threads for a dynamic cache and a static cache of an equivalent size under various numbers of tenants and parallel threads, to compare the effectiveness of the dynamic and static cache. The results presented in FIG. 15C are based on a test conducted using the Falcon-50M dataset, R=64, PQMem=128B, diskPQ=768, Beamwidth=1, V=1, Lbuild = 200, and Lsearch = 40. In FIG. 15C, lines 1541, 1542, 1543, 1544, 1545 indicate mean IOs vs. numbers of threads using (1) dynamic cache, (2) static cache, 1 tenant, (3) static cache, 2 tenants, (4) static cache, 4 tenants, (5) static cache, 8 tenants, respectively. FIG. 15C shows that the dynamic cache outperforms the static cache for up to 100+ threads with even a single tenant. For multiple tenants, the dynamic cache outperforms the static cache even for 100s of parallel threads.

Table 1 below shows results for a dynamic cache size chosen per dataset based on graphs similar to the above, balancing memory usage and Mean IO reduction. The results show that when optimized within the specified memory allocation, the use of a dynamic cache can reduce Mean IOs by 12% to 19% compared to searches performed without a dynamic cache. The results shown in Table 1 are based on tests with R=64, PQMem=128B, diskPQ=768B, Beamwidth=1, V=1, Lbuild=200.

**Table 1. Results for a dynamic cache size chosen per dataset**

| | Mean IOs - Falcon240M, *L_{search}* = 80 | Mean IOs - Falcon50M, *L_{search} =* 40 | Mean IOs - WikiAll50M, *L_{search}* = 40 |
|---|---|---|---|
| Baseline | 5923.3 | 3187.4 | 3171.5 |
| Rearrangement | 3602.2 (-39.2%) | 2066.9 (-35.2%) | 1936.7 (-38.9%) |
| Rearrangement and dynamic cache, capped (240M - 10MB, 50M - 2.4MB) | 2890.5 (-51.2%) | 1811. (-43.2%) | 1644.4 (-48.1%) |
| | Memory usage relative to full PQ dataset [single tenant / 4 tenants / tenant per thread]: | Memory usage relative to full PQ dataset [single tenant / 4 tenants / tenant per thread]: | Memory usage relative to full PQ dataset [single tenant / 4 tenants / tenant per thread]: |
| | 100 threads - 1GB | 100 threads - 0.24GB | |
| | **[3.5% / 0.89% / 0.035%]** | **[3.7% / 0.93% / 0.037%]** | 100 threads - 0.24GB |
| | | | **[3.7%** / **0.93%** / **0.037%]** |
| | 250 threads - 2.5GB | 250 threads - 0.6GB | |
| | | | 250 threads - 0.6GB |
| | **[8.6% / 2.2%** / **0.035%]** | **[9.4% / 2.4% / 0.037%]** | **[9.4% / 2.4%** / **0.037%]** |

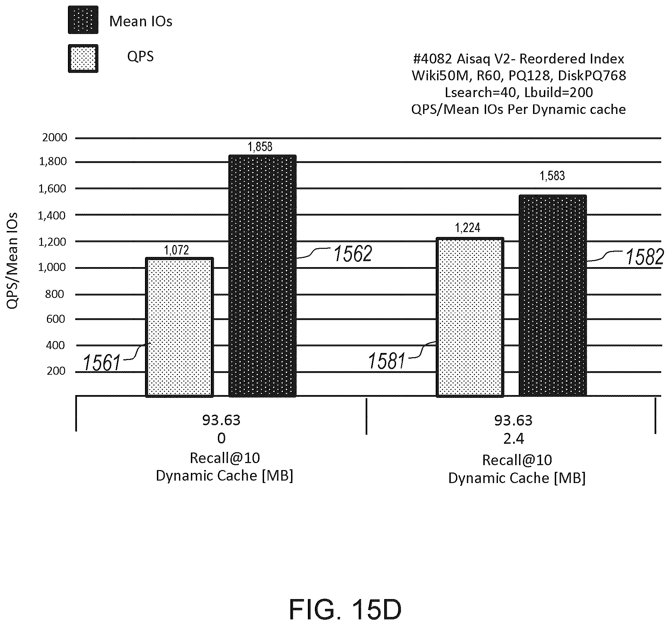

FIG. 15D shows a throughput of queries per second (QPS) and Mean IOs for a baseline configuration (without using a dynamic cache) and an example usage of dynamic cache (bar graphs 1581, 1582). The results shown in FIG. 15D are based on tests using Wiki50M, R=60, PQMem=128B, diskPQ=768B, Lsearch = 40, Lbuild = 200. In FIG. 15D, the baseline configuration achieves a throughput of 1,072 QPS (graph 1561) with 1858 Mean IOs (graph 1562) at 93.63% recall@10. Here, Recall@10 refers to a performance metric used in a search system to measure the proportion of the 10 closest vectors to the query vector within the top 10 results returned by the search system. In other words, Recall@10 can indicate how many of the relevant documents or data are found among the first 10 results. The example usage of dynamic cache with 2.4 MB of memory per thread achieves a throughput of 1,224 QPS (graph 1581) with 1583 Mean IOs (graph 1582), indicating a 14% increase in performance over the baseline configuration. FIG. 15D shows that the reduction in Mean IO translates to higher search throughput.

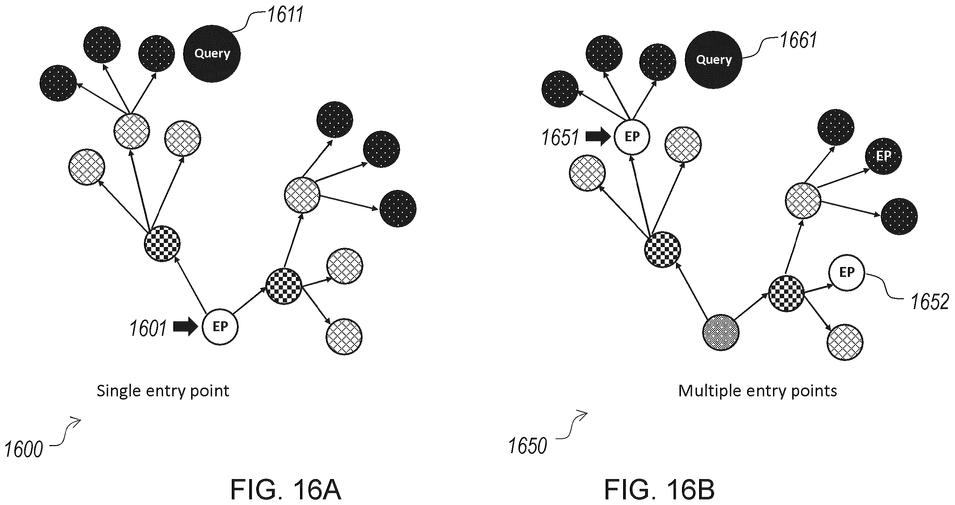

FIG. 16A and FIG. 16B illustrate an example graph 1600 including a single entry point and an example graph 1650 including multiple entry points, respectively, according to some arrangements. In the graph search example shown in FIG. 16A and FIG. 16B, for the standard single entry point search (e.g., search on the graph 1600), search begins at the single entry point 1601 (labelled 'EP') (indicated by the green arrow), and is 3 hops distant from the closest node to the query 1611. For a multiple entry point search (e.g., search on the graph 1650), the distance of each generated entry point candidate 1651, 1652 (labelled EP) to the query 1661 is measured, and the entry point 1651 at the top left of graph would be identified as closest. This entry point candidate is only 1 hop distant from the query, as opposed to the distance of 3 hops on the left.

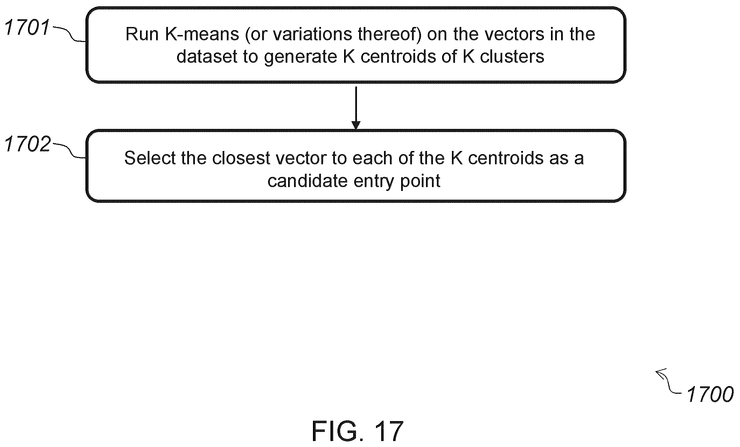

FIG. 17 is a flowchart illustrating an example methodology for generating (initializing) multiple entry points, according to some arrangements. In some arrangements, the example methodology relates to a process 1700 for generating (initializing) multiple entry points. In some arrangements, the process 1700 is performed by one or more processors (e.g. controller 120, processors 126, graph manager 190). In other arrangements, the process 1700 is performed by other entities (e.g., processor 21 of computing device 20). In some arrangements, the process 1700 includes more, fewer, or different steps than shown in FIG. 17.

In some arrangements, at step 1701, the one or more processors can run, execute, or perform a K-means algorithm (or variations thereof) on the vectors in the dataset to generate K centroids of K clusters. In some arrangements, the one or more processors can run, execute, or perform a clustering algorithm other than K-means, for example, hierarchical clustering, density-based spatial clustering of applications with noise (DBSCAN), mean shift clustering, Gaussian mixture models (GMM), spectral clustering, affinity propagation, and so on. In some arrangements, at step 1702, the one or more processors can select, choose, or determine the closest vector to each of the K centroids as a candidate entry point.

In some arrangements, the system can subsample the vectors in the dataset of size N by a factor of M, and run, execute, or perform a K-means algorithm on $\frac{N}{M}$ vectors to generate K centroids of K clusters. This can reduce the computational complexity of the initialization step by a factor of M.

In some arrangements, the system can first quantize the vectors of the dataset, and then run, execute, or perform a K-means algorithm on the quantized vectors, while using the L2 distance (or Euclidean distance) between quantized vectors. This can reduce the computational complexity of the initialization step by the compression factor of the quantization process. For example, for a compression rate of 1:24, the run time can be reduced by a factor of 1:24.

In some arrangements, the system can generate K candidate entry points by randomly selecting K vectors in the dataset as candidate entry points. This can reduce the computational complexity of the initialization step to O(K).

In some arrangements, at search time, the system can use the set of generated candidate entry points to optimize the initialization step of the search algorithm. In the standard single entry point Greedy-search algorithm shown in FIG. 5, when using multiple entry points, the system can replace the standard initialization of the greedy search candidate list L (line 501 in FIG. 5) with the following initialization process.

In a first embodiment, the initialization process for multiple candidate entry points at search time can be performed by (1) calculating the distances between the query and the candidate entry points, (2) initializing the greedy search candidate list L as up to the k closest candidate entry points (to the query), where k is the length of the greedy search candidate list, and (3) performing the remainder of the greedy search as shown in FIG. 5.

In a second embodiment, the initialization process for multiple candidate entry points at search time can be performed by (1) calculating the distances between the query and the candidate entry points, (2) initializing the greedy search candidate list L as the single closest candidate entry point, and (3) performing the remainder of the greedy search as shown in FIG. 5. The computational complexity for both the k-means based entry point generation and the search time candidate entry point selection can scale linearly with the number of generated entry points.

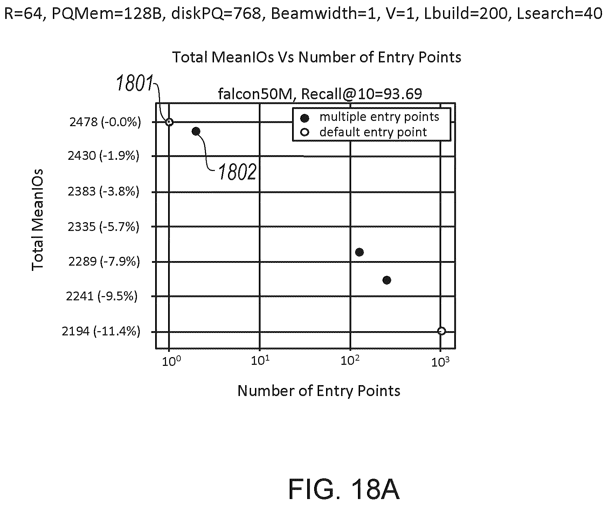

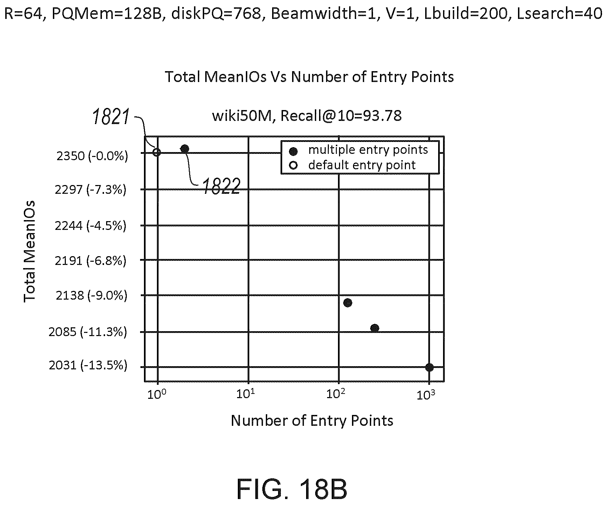

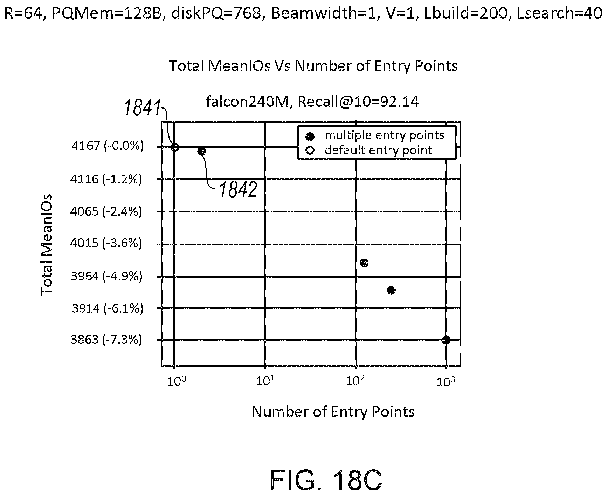

FIG. 18A to FIG. 18C illustrate example results of performance of using multiple entry points, according to some arrangements. The arrangements of multiple entry points as shown in FIG. 16B and FIG. 17 have been tested and/or simulated, and the main results are illustrated in FIG. 18A to FIG. 18C. The results presented in FIG. 18A to FIG. 18C are based on tests conducted using R=64, PQMem=128B, diskPQ=768B, Beamwidth=1, V=1, Lbuild=200.

FIG. 18A to FIG. 18C show total mean IOs vs. number of entry points to indicate the reduction in mean IOs as a function of the number of generated entry points. The test was run without vector (re-)arrangement. The results shown in FIG. 18A to FIG. 18C are based on tests using (1) Falcon50M, Recall@10=93.69, (2) WikiAll50M, Recall@10=93.78, (3) Falcon240M, Recall@10=92.14, respectively. Points 1801, 1821, 1841 indicate default (single) entry points. Points 1801, 1821, 1841 indicate multiple entry points. In the results shown in FIG. 18A to FIG. 18C, the projected reduction in search time-which is assumed to scale linearly with the number of disk reads-exhibits an approximately logarithmic relationship with the number of generated entry points. For Wiki50M, there is up to a reduction of up to 13.5% for 1024 points relative to a single point. For Falcon240M, there is up to a reduction of 7.3% for 1024 entry points relative to a single entry point. For Falcon50M, there is up to a reduction of up to 11.4% for 1024 points relative to a single point

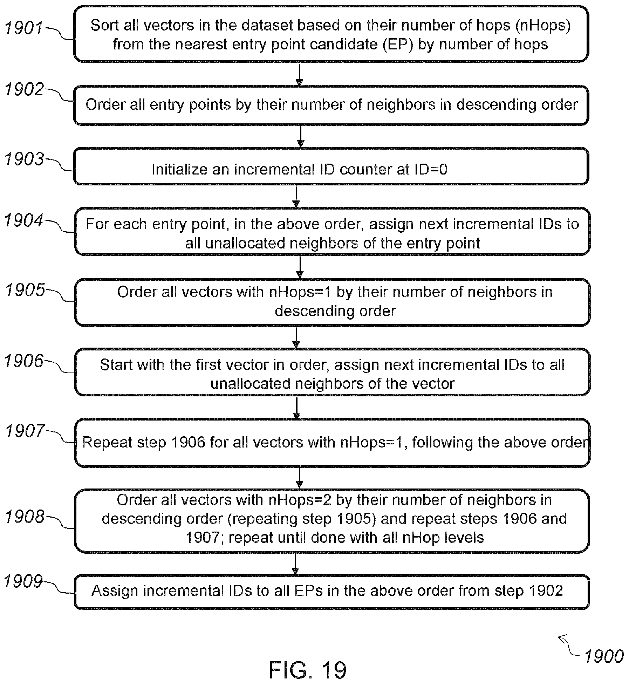

FIG. 19 is a flowchart illustrating an example methodology for vector arrangement for multiple entry points, according to some arrangements. In some arrangements, the example methodology relates to a process 1900 for vector arrangement for multiple entry points. In some arrangements, the process 1900 is performed by one or more processors (e.g. controller 120, processors 126, graph manager 190). In other arrangements, the process 1900 is performed by other entities (e.g., processor 21 of computing device 20). In some arrangements, the process 1900 includes more, fewer, or different steps than shown in FIG. 19.

In some arrangements, at step 1901, the one or more processors can sort all vectors in the dataset based on their number of hops (nHops) from the nearest entry point (EP) candidate (among multiple candidate EPs) by number of hops. In some arrangements, at step 1902, the one or more processors can order or sort all entry points by their number of neighbors in a descending order. In some arrangements, at step 1903, the one or more processors can initialize an incremental ID counter at ID=0. In some arrangements, at step 1904, for each entry point in the order from step 1902, the one or more processors, assign next incremental IDs to all unallocated neighbors of the entry point.

In some arrangements, at step 1905, the one or more processors can order all vectors with nHops=1 by their number of neighbors in a descending order. In some arrangements, at step 1906, the one or more processors can start or begin with the first vector in the list (of all vectors with nHops=1), and assign next incremental IDs to all unallocated neighbors of the first vector.

In some arrangements, at step 1907, the one or more processors can repeat step 1906 for all vectors in the nHops=1 list, following the order from step 1905. In some arrangements, at step 1908, the one or more processors can order or sort all vectors with nHops=2 by their number of neighbors in a descending order (repeating step 1905) and repeat steps 1906 and 1907; and repeat until done with all nHop levels.

In some arrangements, at step 1909, the one or more processors can assign or designate incremental IDs to all EPs in the above order from step 1902.

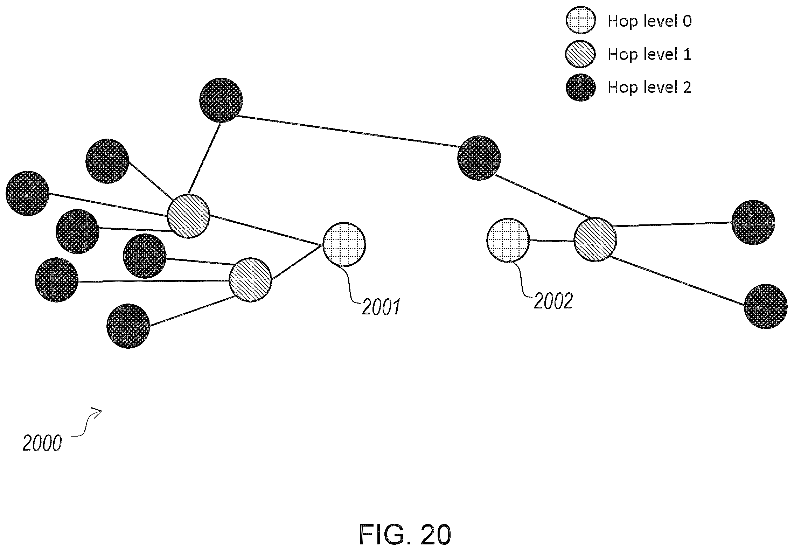

FIG. 20 illustrates an example of hop level assignments for vector arrangement for multiple entry points, according to some arrangements. FIG. 20 illustrates the hop level designations for the process shown in FIG. 19. Hop level 0 corresponds to the entry point or points (e.g., entry points 2001, 2002). Referring to FIG. 20, each vector is colored/patterned according to its distance from the nearest entry points by number of hops (hop level).

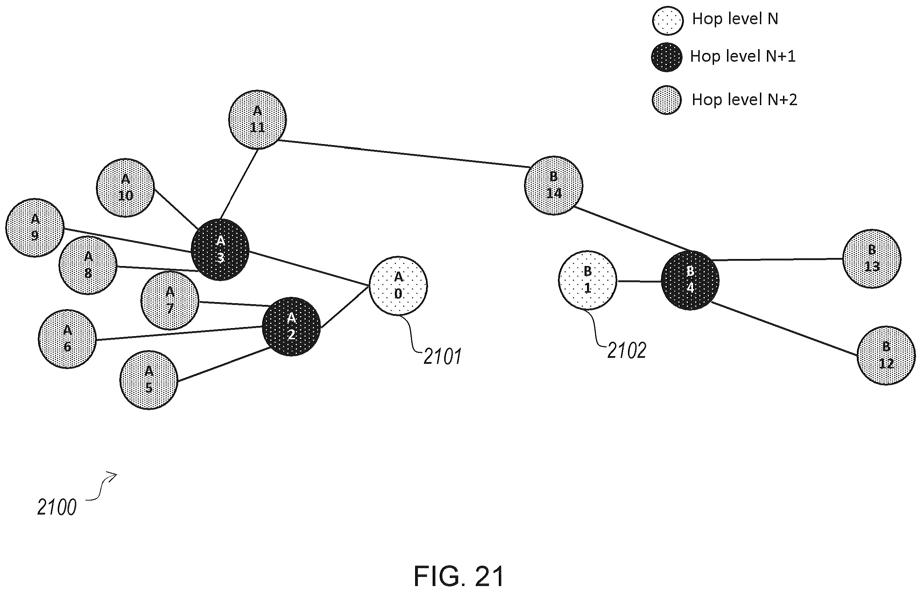

In some arrangements, in step 1905 of the process 1900, the one or more processors can order or sort vectors of the nHop level 1 by their assigned ID in ascending order. In step 1908, the one or more processors can order or sort all vectors with nHops=2 by their assigned ID in ascending order (repeating step 1905) and repeat steps 1906 and 1907; and repeat until done with all nHop levels.. By this method, the system can group vectors in each hop level according to their "ancestor" or "ancestor vector" (the vector by which they are ordered as neighbors of) in the previous hop level. Such a group of vectors is denoted by an "ancestor group" or "descendants" of the ancestor vector. The system can add to the SSD, the neighbors of each vector in the ancestor group, one set of neighbors at a time. After ordering the neighbors of each vector in the ancestor group, the system can continue to the next ancestor group and repeat the process for each group. This can ensure that all vectors encountered at a given hop level through connections to a given entry point are grouped together in the SSD. FIG. 21 demonstrates the ordering process of grouping vectors in each hop level according to their ancestor vector.

FIG. 21 illustrates an example of an ordering process for vector arrangement for multiple entry points, according to some arrangements. As shown in FIG. 21, all vectors in group A of hop level N+2 (vectors with label A) can be ordered together in the SSD with consecutive IDs, in a separate group from all vectors in group B of hop level N+2 (vectors with label A). Group A can be labelled with IDs 5-11, and group B is labelled with IDs 12-14. These groupings can be dictated by their common ancestor in hop level N. For example, nodes (entry points) 2101, 2102 indicate the ancestor vector of group A (with ID 0) and the ancestor vector of group B (with ID 1), respectively. As shown in FIG. 21, if hop level N contains the entry points (N=0), the descendants of a given entry point (e.g., entry point 2101) can be grouped together in the SSD, separate from descendants of other entry points (e.g., entry point 2102).

In some arrangements, in steps 1902 and 1905 and 1908 of the process 1900, the ordering of the unallocated vectors within the same hop level can be random. In some arrangements, in step 1905 and 1908 of the process 1900, the system can order the unallocated neighbors of the current vector by their distance from the vector in ascending order, and assign incremental IDs in their order. In some arrangements, in steps 1902 and 1905 and 1908 of the process 1900, the system can order the unallocated neighbors by the number of currently unallocated neighbors of each of those neighbors, and assign incremental IDs in that order.

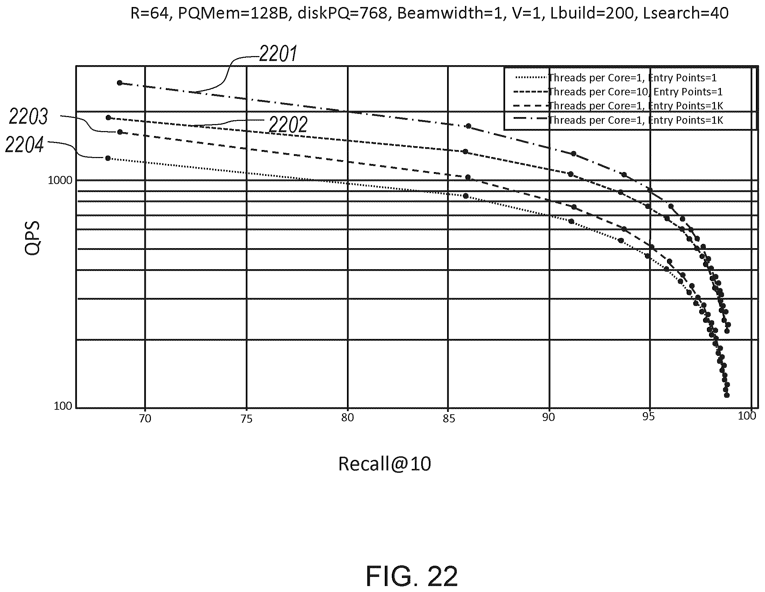

FIG. 22 illustrates example results (queries per second (QPS) vs. Recall@10) of throughput of searches with different configurations, according to some arrangements. The arrangements of multiple entry points and vector arrangement as shown in FIG. 16B, FIG. 17, FIG. 19, FIG. 20 and FIG. 21 have been tested in a laboratory setting, and the main results are illustrated in FIG. 22. For example, the effect of multiple generated entry points, together with the vector arrangement algorithm, was tested by measuring throughput for a single graph of the WikiAll50M dataset with both a single entry point and 1k entry points. The tests used R=60, PQMem=128B, diskPQ=768, Dynamic cache=4.8M, Beamwidth=1, V=1, Lbuild=200, Lsearch=10-250.

In FIG. 22, curves 2201, 2202, 2203, and 2204 indicates QPS vs. Recall@10 for different configurations (1) # of threads per core=1, # of entry points = 1, (2) # of threads per core=10, # of entry points = 1, (3) # of threads per core=1, # of entry points = 1K, and (4) # of threads per core=10, # of entry points = 1K, respectively. FIG. 22 shows that throughput is significantly up to a recall of 95 or higher for both 1 and 10 threads per core. For example, with 10 threads per core at a recall of 95%, the arrangements of multiple entry points can increase the QPS by over 13% compared with the arrangements of a single entry point.

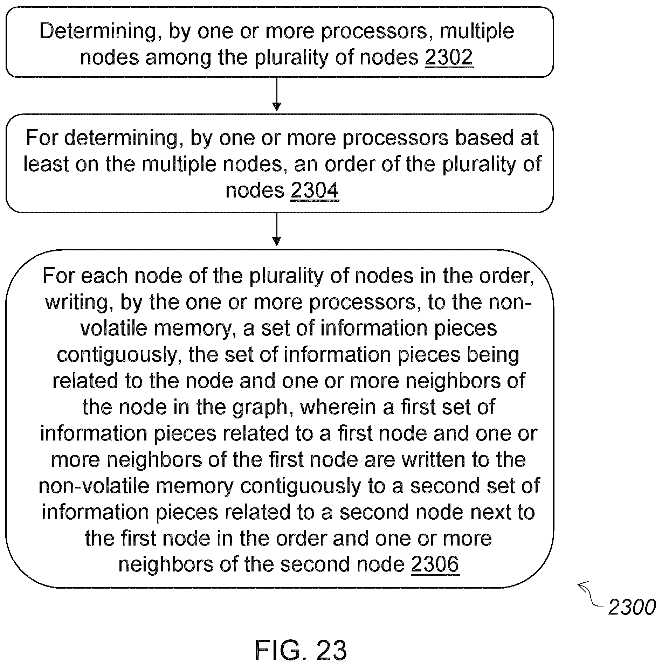

FIG. 23 is a flowchart illustrating an example methodology for writing, to an NVM, data representing or corresponding to a plurality of nodes of a graph with multiple entry points, according to some arrangements. In some arrangements, the example methodology relates to a process 2300 for writing, to a non-volatile memory (e.g., flash memory 180), data representing a plurality of nodes of a graph with multiple entry points (e.g., graph 1650, 2000, 2100). In some arrangements, the process 2300 is performed by one or more processors (e.g. controller 120, processor 126, graph manager 190). In other arrangements, the process 2300 is performed by other entities (e.g., processor 21 of computing device 20). In some arrangements, the process 2300 includes more, fewer, or different steps than shown in FIG. 23.

In this example, the process 2300 begins in step S2302 by determining, by one or more processors (e.g., controller 120, processor 126, graph manager 190, processor 21), multiple nodes among the plurality of nodes. In some arrangements, in determining the multiple nodes, the one or more processors may execute a clustering algorithm on vectors of the plurality of nodes to determine multiple clusters. For each cluster, the one or more processors may determine or select, as an entry point (e.g., multiple entry points 1651, 1652), a vector closest to a centroid of the cluster. The clustering algorithm may be a K-means algorithm.

In some arrangements, in executing the clustering algorithm, the one or more processors may sample, from among the plurality of nodes, N number of nodes by a factor of M where M, N are positive integers. The one or more processors may execute the clustering algorithm on $\frac{N}{M}$ vectors to generate the multiple clusters. In some arrangements, in executing the clustering algorithm, the one or more processors may quantize the vectors of the plurality of nodes to generate a plurality of quantized vectors. The one or more processors may execute the clustering algorithm on the plurality of quantized vectors using an L2 distance between quantized vectors.

In step S2304, in some arrangements, the one or more processors may determine, based at least on the multiple nodes (e.g., multiple entry points 1651, 1652), an order of the plurality of nodes. In some arrangements, the order of the plurality of nodes may include an ascending order of a number of hops of each of the plurality of nodes from a nearest node of the node, from among the multiple nodes (e.g., step 1901 of process 1900). In some arrangements, the order of the plurality of nodes may include a descending order of a number of neighbors of each of the multiple nodes (e.g., step 1902 of process 1900). In some arrangements, the order of the plurality of nodes may include a descending order of a number of neighbors of each of one or more nodes at a same number of hops in the graph (e.g., step 1908 of process 1900).

In step S2306, in some arrangements, for each node of the plurality of nodes in the order, the one or more processors may write, to the non-volatile memory, a set of information pieces contiguously, the set of information pieces (e.g., vectors) being related to the node and one or more neighbors of the node in the graph. In some arrangements, a first set of information pieces related to a first node and one or more neighbors of the first node may be written to the non-volatile memory contiguously to a second set of information pieces related to a second node next to the first node in the order and one or more neighbors of the second node. For example, as shown in FIG. 4, as a result of writing or arranging the information pieces according to a certain order (e.g., an ascending order of the number of hops of the nodes from a nearest entry point, and/or a descending order of a number of neighbors of each of one or more nodes at a same number of hops in the graph), neighboring vectors of the first node and neighboring vectors of the second node (e.g., PQ vectors 451, 452, 453) can be arranged adjacently on the NVM (e.g., SSD).

In some arrangements, each of the multiple nodes may be an entry point of the graph (e.g., multiple entry points 1651, 1652). Each of the information pieces related to the plurality of nodes may include a vector. The one or more processors may receive a query vector (e.g., query vector 1661) relating to a query. The one or more processors may determine an entry point that is closest to the query vector among the multiple entry points (e.g., closest entry point 1651). The one or more processors may execute the query on the graph to perform search for one or more vectors from the entry point (e.g., closest entry point 1651).

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language claims, wherein reference to an element in the singular is not intended to mean "one and only one" unless specifically so stated, but rather "one or more." Unless specifically stated otherwise, the term "some" refers to one or more. All structural and functional equivalents to the elements of the various aspects described throughout the previous description that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims. No claim element is to be construed as a means plus function unless the element is expressly recited using the phrase "means for."

It is understood that the specific order or hierarchy of steps in the processes disclosed is an example of illustrative approaches. Based upon design preferences, it is understood that the specific order or hierarchy of steps in the processes may be rearranged while remaining within the scope of the previous description. The accompanying method claims present elements of the various steps in a sample order, and are not meant to be limited to the specific order or hierarchy presented.

The previous description of the disclosed implementations is provided to enable any person skilled in the art to make or use the disclosed subject matter. Various modifications to these implementations will be readily apparent to those skilled in the art, and the generic principles defined herein may be applied to other implementations without departing from the spirit or scope of the previous description. Thus, the previous description is not intended to be limited to the implementations shown herein but is to be accorded the widest scope consistent with the principles and novel features disclosed herein.

The various examples illustrated and described are provided merely as examples to illustrate various features of the claims. However, features shown and described with respect to any given example are not necessarily limited to the associated example and may be used or combined with other examples that are shown and described. Further, the claims are not intended to be limited by any one example.

The foregoing method descriptions and the process flow diagrams are provided merely as illustrative examples and are not intended to require or imply that the steps of various examples must be performed in the order presented. As will be appreciated by one of skill in the art the order of steps in the foregoing examples may be performed in any order. Words such as "thereafter," "then," "next," etc. are not intended to limit the order of the steps; these words are simply used to guide the reader through the description of the methods. Further, any reference to claim elements in the singular, for example, using the articles "a," "an" or "the" is not to be construed as limiting the element to the singular.

The various illustrative logical blocks, modules, circuits, and algorithm steps described in connection with the examples disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

The hardware used to implement the various illustrative logics, logical blocks, modules, and circuits described in connection with the examples disclosed herein may be implemented or performed with a general purpose processor, a DSP, an ASIC, an FPGA or other programmable logic device, discrete gate or transistor logic, discrete hardware components, or any combination thereof designed to perform the functions described herein. A general-purpose processor may be a microprocessor, but, in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. Alternatively, some steps or methods may be performed by circuitry that is specific to a given function.

In some exemplary examples, the functions described may be implemented in hardware, software, firmware, or any combination thereof. If implemented in software, the functions may be stored as one or more instructions or code on a non-transitory computer-readable storage medium or non-transitory processor-readable storage medium. The steps of a method or algorithm disclosed herein may be embodied in a processor-executable software module which may reside on a non-transitory computer-readable or processor-readable storage medium. Non-transitory computer-readable or processor-readable storage media may be any storage media that may be accessed by a computer or a processor. By way of example but not limitation, such non-transitory computer-readable or processor-readable storage media may include RAM, ROM, EEPROM, FLASH memory, CD-ROM or other optical disk storage, magnetic disk storage or other magnetic storage devices, or any other medium that may be used to store desired program code in the form of instructions or data structures and that may be accessed by a computer. Disk and disc, as used herein, includes compact disc (CD), laser disc, optical disc, digital versatile disc (DVD), floppy disk, and blu-ray disc where disks usually reproduce data magnetically, while discs reproduce data optically with lasers. Combinations of the above are also included within the scope of non-transitory computer-readable and processor-readable media. Additionally, the operations of a method or algorithm may reside as one or any combination or set of codes and/or instructions on a non-transitory processor-readable storage medium and/or computer-readable storage medium, which may be incorporated into a computer program product.

The preceding description of the disclosed examples is provided to enable any person skilled in the art to make or use the present disclosure. Various modifications to these examples will be readily apparent to those skilled in the art, and the generic principles defined herein may be applied to some examples without departing from the spirit or scope of the disclosure. Thus, the present disclosure is not intended to be limited to the examples shown herein but is to be accorded the widest scope consistent with the following claims and the principles and novel features disclosed herein.

## Claims

1. A method for writing, to a non-volatile memory, data representing a plurality of nodes of a graph, the method comprising:
determining, by one or more processors, multiple nodes among the plurality of nodes;
determining, by the one or more processors based at least on the multiple nodes, an order of the plurality of nodes; and
for each node of the plurality of nodes in the order, writing, by the one or more processors, to the non-volatile memory, a set of information pieces contiguously, the set of information pieces being related to the node and one or more neighbors of the node in the graph,
wherein a first set of information pieces related to a first node and one or more neighbors of the first node are written to the non-volatile memory contiguously to a second set of information pieces related to a second node next to the first node in the order and one or more neighbors of the second node.

2. The method of claim 1, wherein
each of the multiple nodes is an entry point of the graph, and
each of the information pieces related to the plurality of nodes comprises a vector.

3. The method of claim 2, further comprising:
receiving a query vector relating to a query;
determining an entry point that is closest to the query vector among the multiple entry points; and
executing the query on the graph to perform search for one or more vectors from the entry point.

4. The method of claim 2, wherein determining the multiple nodes comprises:
executing a clustering algorithm on vectors of the plurality of nodes to determine multiple clusters; and
for each cluster, determining, as an entry point, a vector closest to a centroid of the cluster.

5. The method of claim 4, wherein the clustering algorithm is a K-means algorithm.

6. The method of claim 4, wherein executing the clustering algorithm comprises:
sampling, from among the plurality of nodes, N number of nodes by a factor of M where M, N are positive integers; and
executing the clustering algorithm on $\frac{N}{M}$ vectors to generate the multiple clusters.

7. The method of claim 4, wherein executing the clustering algorithm comprises:
quantizing the vectors of the plurality of nodes to generate a plurality of quantized vectors; and
executing the clustering algorithm on the plurality of quantized vectors using an L2 distance between quantized vectors.

8. The method of claim 1, wherein the order of the plurality of nodes comprises an ascending order of a number of hops of each of the plurality of nodes from a nearest node of the node, from among the multiple nodes.

9. The method of claim 1, wherein the order of the plurality of nodes comprises a descending order of a number of neighbors of each of the multiple nodes.

10. The method of claim 1, wherein the order of the plurality of nodes comprises a descending order of a number of neighbors of each of one or more nodes at a same number of hops in the graph.

11. A flash memory system comprising:
a non-volatile memory configured to store information pieces related to a plurality of nodes of a graph; and
one or more processors configured to:
determine multiple nodes among the plurality of nodes;
determine, based at least on the multiple nodes, an order of the plurality of nodes; and
for each node of the plurality of nodes in the order, write, to the non-volatile memory, a set of information pieces contiguously, the set of information pieces being related to the node and one or more neighbors of the node in the graph,
wherein a first set of information pieces related to a first node and one or more neighbors of the first node are written to the non-volatile memory contiguously to a second set of information pieces related to a second node next to the first node in the order and one or more neighbors of the second node.

12. The flash memory system of claim 11, wherein
each of the multiple nodes is an entry point of the graph, and
each of the information pieces related to the plurality of nodes comprises a vector.

13. The flash memory system of claim 12, wherein the one or more processors are configured to:
receive a query vector relating to a query;
determine an entry point that is closest to the query vector among the multiple entry points; and
execute the query on the graph to perform search for one or more vectors from the entry point.

14. The flash memory system of claim 12, wherein in determining the multiple nodes, the one or more processors are configured to:
execute a clustering algorithm on vectors of the plurality of nodes to determine multiple clusters; and
for each cluster, determine, as an entry point, a vector closest to a centroid of the cluster.

15. The flash memory system of claim 14, wherein the clustering algorithm is a K-means algorithm.

16. The flash memory system of claim 14, wherein in executing the clustering algorithm, the one or more processors are configured to:
sample, from among the plurality of nodes, N number of nodes by a factor of M where M, N are positive integers; and
execute the clustering algorithm on $\frac{N}{M}$ vectors to generate the multiple clusters.

17. The flash memory system of claim 14, wherein in executing the clustering algorithm, the one or more processors are configured to:
quantize the vectors of the plurality of nodes to generate a plurality of quantized vectors; and
execute the clustering algorithm on the plurality of quantized vectors using an L2 distance between quantized vectors.

18. The flash memory system of claim 11, wherein the order of the plurality of nodes comprises an ascending order of a number of hops of each of the plurality of nodes from a nearest node of the node, from among the multiple nodes.

19. The flash memory system of claim 11, wherein the order of the plurality of nodes comprises a descending order of a number of neighbors of each of the multiple nodes.

20. The flash memory system of claim 11, wherein the order of the plurality of nodes comprises a descending order of a number of neighbors of each of one or more nodes at a same number of hops in the graph.
